(19) Europäisches Patentamt
European Patent Office
Office européen des brevets

(11) **EP 4 254 565 A1**

(12) **EUROPEAN PATENT APPLICATION**
published in accordance with Art. 153(4) EPC

(43) Date of publication:
**04.10.2023 Bulletin 2023/40**

(21) Application number: **21897833.6**

(22) Date of filing: **17.11.2021**

(51) International Patent Classification (IPC):
*H01M 4/62* (2006.01)    *H01G 11/06* (2013.01)
*H01G 11/38* (2013.01)    *H01G 11/40* (2013.01)
*H01M 4/13* (2010.01)

(52) Cooperative Patent Classification (CPC):
**H01G 11/06; H01G 11/38; H01G 11/40; H01M 4/13;**
**H01M 4/62;** Y02E 60/10

(86) International application number:
**PCT/JP2021/042327**

(87) International publication number:
**WO 2022/113859 (02.06.2022 Gazette 2022/22)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **27.11.2020   JP 2020197556**
**27.11.2020   JP 2020197555**

(71) Applicant: **Zeon Corporation**
**Tokyo 100-8246 (JP)**

(72) Inventors:
• **ITO Yukie**
**Tokyo 100-8246 (JP)**
• **TAKAHASHI Naoki**
**Tokyo 100-8246 (JP)**

(74) Representative: **Maiwald GmbH**
**Elisenhof**
**Elisenstraße 3**
**80335 München (DE)**

(54) **PASTE FOR ELECTROCHEMICAL ELEMENT, SLURRY FOR ELECTROCHEMICAL ELEMENT ELECTRODE, ELECTROCHEMICAL ELEMENT ELECTRODE, AND ELECTROCHEMICAL ELEMENT**

(57)    A paste for an electrochemical device contains a conductive material, a polymer A, and a dispersion medium. The conductive material includes a fibrous conductive material and is contained in the paste in a proportion of more than 2 mass%. The polymer A includes a nitrile group-containing monomer unit and an alkylene structural unit and has a Mooney viscosity ($ML_{1+4}$, 100°C) of not less than 70 and not more than 150. The paste contains the polymer A in a proportion of more than 50 parts by mass and not more than 200 parts by mass per 100 parts by mass of the conductive material.

EP 4 254 565 A1

**Description**

TECHNICAL FIELD

The present disclosure relates to a paste for an electrochemical device, a slurry for an electrochemical device electrode, an electrode for an electrochemical device, and an electrochemical device.

BACKGROUND

Electrochemical devices such as lithium ion secondary batteries, lithium ion capacitors, and electric double-layer capacitors have characteristics such as compact size, light weight, high energy-density, and the ability to be repeatedly charged and discharged, and are used in a wide range of applications. An electrode for an electrochemical device may include a current collector and an electrode mixed material layer formed on the current collector, for example. This electrode mixed material layer is formed by, for example, applying a slurry for an electrochemical device electrode containing an electrode active material, a conductive material, and a binder onto the current collector and then drying the slurry for an electrochemical device electrode.

In recent years, attempts have been made to improve slurries for electrochemical device electrodes that are used in electrode mixed material layer formation in order to achieve further improvement of electrochemical device performance.

For example, Patent Literature (PTL) 1 proposes using, as a slurry for an electrode of a secondary battery, a carbon nanotube dispersion liquid that contains bundle-type carbon nanotubes, a dispersion medium, and a specific partially hydrogenated nitrile rubber and that contains a specific amount of the partially hydrogenated nitrile rubber relative to the bundle-type carbon nanotubes.

CITATION LIST

Patent Literature

PTL 1: JP6633654B2

SUMMARY

(Technical Problem)

However, there is room for improvement in the conventional technique described above in terms of improving dispersibility of a slurry for an electrochemical device electrode and also reducing internal resistance of an electrochemical device over a long period. Moreover, there are instances in which adding a conductive material to a slurry for an electrochemical device electrode results in sedimentation readily occurring in the slurry for an electrochemical device electrode. Therefore, there is also room for improvement of a conventional slurry for an electrochemical device electrode in terms of increasing sedimentation resistance.

Accordingly, one object of the present disclosure is to provide a paste for an electrochemical device that can improve dispersibility and sedimentation resistance of a slurry for an electrochemical device electrode and can also reduce internal resistance of an electrochemical device over a long period.

Another object of the present disclosure is to provide a slurry for an electrochemical device electrode that has excellent dispersibility and sedimentation resistance and can reduce internal resistance of an electrochemical device over a long period.

Another object of the present disclosure is to provide an electrode for an electrochemical device that can reduce internal resistance of an electrochemical device over a long period.

Another object of the present disclosure is to provide an electrochemical device having reduced internal resistance over a long period.

(Solution to Problem)

The inventors conducted diligent investigation with the aim of solving the problems set forth above. The inventors discovered that it is possible to obtain a slurry for an electrochemical device electrode having excellent dispersibility and sedimentation resistance by using a paste for an electrochemical device that contains a conductive material including a fibrous conductive material, a polymer having a specific chemical composition and Mooney viscosity, and a dispersion medium and that contains the conductive material and the polymer in specific proportions. The inventors also discovered that by using this slurry for an electrochemical device electrode, it is possible to obtain an electrode for an electrochemical device that can reduce internal resistance of an electrochemical device over a long period, and, in this manner, completed the present disclosure.

Specifically, the present disclosure aims to advantageously solve the problem set forth above, and a presently disclosed paste for an electrochemical device comprises a conductive material, a polymer A, and a dispersion medium, wherein the conductive material includes a fibrous conductive material, the paste for an electrochemical device contains the conductive material in a proportion of more than 2 mass%, the polymer includes a nitrile group-containing monomer unit and an alkylene structural unit and has a Mooney viscosity ($ML_{1+4}$, 100°C) of not less than 70 and not more than 150, and the paste for an electrochemical device contains the polymer A in a proportion of more than 50 parts by mass and not more than 200 parts by mass per 100 parts by mass of the conductive material. By using a paste for an electrochemical device that contains a conductive material including a fibrous conductive material, a polymer A having a specific chemical composition and Mooney viscosity, and a dispersion medium and that contains the conductive material and the polymer A in specific proportions in this manner, it is possible to produce a slurry for an electrochemical device electrode having excellent dispersibility and sedimentation resistance. Moreover, by using this slurry for an electrochemical device electrode, it is possible to produce an electrode for an electrochemical device that can reduce internal resistance of an electrochemical device over a long period.

Note that when a polymer is said to "include a monomer unit" in the present disclosure, this means that a polymer obtained using that monomer includes a structural unit derived from the monomer. Also note that the proportional content of a repeating unit (monomer unit or subsequently described structural unit) in a polymer referred to in the present disclosure can be measured by a nuclear magnetic resonance (NMR) method such as $^1$H-NMR or $^{13}$C-NMR.

Moreover, the "Mooney viscosity ($ML_{1+4}$, 100°C)" referred to in the present disclosure can be measured in accordance with JIS K6300-1 at a temperature of 100°C.

Furthermore, the term "fibrous conductive material" as used in the present disclosure refers to a conductive material having an aspect ratio (major axis/minor axis) of normally 10 or more as measured by a transmission electron microscope (TEM).

In the presently disclosed paste for an electrochemical device, the polymer A preferably has an iodine value of not less than 0.01 mg/100 mg and not more than 70 mg/100 mg. When the iodine value of the polymer A is within the range set forth above, the paste for an electrochemical device has better viscosity, which makes it possible to increase the solid content concentration of a slurry for an electrochemical device electrode produced using the paste for an electrochemical device. Moreover, productivity can be increased in formation of an electrode mixed material layer from this slurry for an electrochemical device electrode. Furthermore, there is better electrical conductivity in the electrode mixed material layer, which makes it possible to effectively suppress internal resistance increase of an electrochemical device.

Note that the "iodine value" referred to in the present disclosure can be measured in accordance with JIS K6235(2006).

In the presently disclosed paste for an electrochemical device, the fibrous conductive material preferably has a ratio of surface acid content relative to surface base content (surface acid content/surface base content) of not less than 0.1 and not more than 2.5. When the fibrous conductive material has a ratio of surface acid content relative to surface base content that is within the range set forth above, it is possible to further increase the solid content concentration of a slurry for an electrochemical device electrode. Moreover, productivity can be further increased in formation of an electrode mixed material layer from this slurry for an electrochemical device electrode. It is also possible to more effectively suppress internal resistance increase of an electrochemical device.

Note that the "surface base content" and "surface acid content" of a fibrous conductive material referred to in the present disclosure can be measured by methods described in the EXAMPLES section of the present specification.

In the presently disclosed paste for an electrochemical device, it is preferable that the surface base content is not less than 0.005 mmol/g and not more than 0.1 mmol/g, and the surface acid content is not less than 0.01 mmol/g and not more than 0.2 mmol/g. When the surface base content and the surface acid content of the fibrous conductive material are within the ranges set forth above, it is possible to more effectively suppress internal resistance increase of an electrochemical device.

In the presently disclosed paste for an electrochemical device, the dispersion medium is preferably an organic solvent. A paste for an electrochemical device that contains an organic solvent as a dispersion medium can suitably be used in production of a slurry for an electrochemical device electrode.

In the presently disclosed paste for an electrochemical device, the conductive material may further include either or both of a particulate conductive material and a plate-shaped conductive material. The above-described effects according to the present disclosure are sufficiently obtained even when the conductive material contained in the paste for an electrochemical device further includes a particulate conductive material and/or a plate-shaped conductive material.

Note that the term "particulate conductive material" as used in the present disclosure refers to a conductive material having an aspect ratio (major axis/minor axis), as measured by a scanning electron microscope, that is normally 1 or more, and is normally less than 10, preferably 5 or less, more preferably 3 or less, and even more preferably 2 or less.

Also note that the term "plate-shaped conductive material" as used in the present disclosure refers to a conductive material having a flattened, flat plate-like, flaked, or scaly shape, for example.

In the presently disclosed paste for an electrochemical device, the plate-shaped conductive material preferably has a ratio of maximum length in an in-plane direction of the plate-shaped conductive material relative to thickness of the plate-shaped conductive material of not less than 5 and not more than 500. When the ratio of the maximum length in an in-plane direction of the plate-shaped conductive material relative to the thickness of the plate-shaped conductive material is not less than 5 and not more than 500, it is possible to more stably reduce internal resistance of an electrochemical device over a long period.

Note that the thickness in an in-plane direction of the plate-shaped conductive material and the maximum length in an in-plane direction of the plate-shaped conductive material can be measured using a scanning microscope.

In the presently disclosed paste for an electrochemical device, the maximum length in an in-plane direction of the plate-shaped conductive material is preferably not less than 0.1 $\mu$m and not more than 10 $\mu$m. When the maximum length in an in-plane direction of the plate-shaped conductive material is within the range set forth above, it is possible to further increase the solid content concentration of a slurry for an electrode produced using the presently disclosed paste and to more stably reduce internal resistance of an electrochemical device over a long period.

In the presently disclosed paste for an electrochemical device, the thickness of the plate-shaped conductive material is preferably not less than 0.3 nm and not more than 50 nm. When the thickness of the plate-shaped conductive material is within the range set forth above, it is possible to further increase binding capacity of an electrode mixed material layer obtained using the presently disclosed paste and to more stably reduce internal resistance of an electrochemical device over a long period.

In the presently disclosed paste for an electrochemical device, the conductive material preferably includes the fibrous conductive material and a conductive material other than the fibrous conductive material in a mass ratio of 100:0 to 50:50. When the content ratio of the fibrous conductive material and a conductive material other than the fibrous conductive material in the conductive material is within the range set forth above, an electrode mixed material layer that is formed using the paste for an electrochemical device has better electrical conductivity, and it is possible to even more stably reduce internal resistance of an electrochemical device over a long period.

Moreover, the present disclosure aims to advantageously solve the problems set forth above, and a presently disclosed slurry for an electrochemical device electrode comprises: an electrode active material; and any one of the pastes for an electrochemical device set forth above. A slurry for an electrochemical device electrode that contains an electrode active material and any one of the pastes for an electrochemical device set forth above in this manner has excellent dispersibility and sedimentation resistance. Moreover, by using this slurry for an electrochemical device electrode, it is possible to produce an electrode for an electrochemical device that can reduce internal resistance of an electrochemical device over a long period.

The presently disclosed slurry for an electrochemical device electrode may further comprise a polymer B, wherein content of the polymer B may be 50 mass% or less relative to total content of the polymer A and the polymer B. Moreover, the polymer B may be a fluorine-containing resin. The above-described effects according to the present disclosure can be sufficiently obtained even in the case of a slurry for an electrochemical device electrode that contains a polymer B.

Furthermore, the present disclosure aims to advantageously solve the problems set forth above, and a presently disclosed electrode for an electrochemical device comprises an electrode mixed material layer formed using any one of the slurries for an electrochemical device electrode set forth above. An electrode that includes an electrode mixed material layer formed using any one of the slurries for an electrochemical device electrode set forth above can reduce internal resistance of an electrochemical device over a long period and can also cause the electrochemical device to display excellent device characteristics.

Also, the present disclosure aims to advantageously solve the problems set forth above, and a presently disclosed electrochemical device comprises the electrode for an electrochemical device set forth above. An electrochemical device that includes the electrode for an electrochemical device set forth above has reduced internal resistance over a long period and excellent device characteristics.

(Advantageous Effect)

According to the present disclosure, it is possible to provide a paste for an electrochemical device that can improve dispersibility and sedimentation resistance of a slurry for an electrochemical device electrode and can also reduce internal resistance of an electrochemical device over a long period.

Moreover, according to the present disclosure, it is possible to provide a slurry for an electrochemical device electrode that has excellent dispersibility and sedimentation resistance and can reduce internal resistance of an electrochemical device over a long period.

Furthermore, according to the present disclosure, it is possible to provide an electrode for an electrochemical device that can reduce internal resistance of an electrochemical device over a long period.

Also, according to the present disclosure, it is possible to provide an electrochemical device having reduced internal resistance over a long period.

DETAILED DESCRIPTION

The following provides a detailed description of embodiments of the present disclosure.

The presently disclosed paste for an electrochemical device (hereinafter, also referred to simply as a "paste") can be used as a material in production of a slurry for an electrochemical device electrode. Moreover, the presently disclosed slurry for an electrochemical device electrode (hereinafter, also referred to simply as a "slurry for an electrode") is produced using the presently disclosed paste. Furthermore, the presently disclosed electrode for an electrochemical device includes an electrode mixed material layer that is formed from the presently disclosed slurry for an electrode. Also, the presently disclosed electrochemical device includes the presently disclosed electrode for an electrochemical device.

(Paste for electrochemical device)

The presently disclosed paste for an electrochemical device contains a conductive material, a polymer A, and a dispersion medium and may optionally contain other components. The presently disclosed paste contains a fibrous conductive material as the conductive material. Moreover, the polymer A includes a nitrile group-containing monomer unit and an alkylene structural unit and has a Mooney viscosity ($ML_{1+4}$, 100°C) of not less than 70 and not more than 150. Furthermore, the presently disclosed paste contains the conductive material in a proportion of more than 2 mass% and contains the polymer A in a proportion of more than 50 parts by mass and not more than 200 parts by mass per 100 parts by mass of the conductive material. Consequently, by using the presently disclosed paste to produce a slurry for an electrode, it is possible to improve dispersibility and sedimentation resistance of the slurry for an electrode. Moreover, by using a slurry for an electrode that contains the presently disclosed paste, it is possible to produce an electrode for an electrochemical device that can reduce internal resistance of an electrochemical device over a long period.

<Conductive material>

The conductive material is a material for ensuring electrical contact among an electrode active material in an electrode mixed material layer. The presently disclosed paste contains a fibrous conductive material as the conductive material. Note that the presently disclosed paste may optionally contain conductive materials other than the fibrous conductive material (hereinafter, referred to as "other conductive materials").

<<Fibrous conductive material>>

The fibrous conductive material may be single-walled or multi-walled carbon nanotubes (hereinafter, referred to as "CNTs"), carbon nanohorns, vapor-grown carbon fiber, milled carbon fiber, or the like, for example. One of these fibrous conductive materials may be used individually, or two or more of these fibrous conductive materials may be used in combination. Of these fibrous conductive materials, CNTs are preferable.

The BET specific surface area of CNTs that can suitably be used as the fibrous conductive material is preferably 50 $m^2$/g or more, and more preferably 100 $m^2$/g or more, and is preferably 1,000 $m^2$/g or less, more preferably 800 $m^2$/g or less, and even more preferably 500 $m^2$/g or less. When the BET specific surface area of the CNTs is within any of the ranges set forth above, good electrical conduction paths can be formed in an electrode mixed material layer, and output characteristics of an electrochemical device can be improved.

Note that the term "BET specific surface area" as used in the present disclosure refers to nitrogen adsorption specific surface area measured by the BET method and can be measured in accordance with ASTM D3037-81.

Note that the CNTs can be CNTs that have been synthesized by a known CNT synthesis method such as arc discharge, laser ablation, or chemical vapor deposition (CVD) without any specific limitations.

<<Other conductive materials>>

Known conductive materials that can be compounded in electrodes of electrochemical devices can be used as other conductive materials. Examples of such conductive materials include particulate conductive materials and plate-shaped conductive materials. The particulate conductive materials may be carbon black (for example, acetylene black, Ketjenblack® (Ketjenblack is a registered trademark in Japan, other countries, or both), or furnace black), for example.

The plate-shaped conductive material may be graphene, graphite, or the like, for example. Of these examples, a plate-shaped conductive material is preferable as another conductive material, with graphene being preferable. One of these other conductive materials may be used individually, or two or more of these other conductive materials may be used in combination.

The graphene can be graphene produced by any commonly known method such as CVD, physical exfoliation, or chemical exfoliation. Moreover, commercially available graphene can be used.

Note that the production of graphene preferably includes a step of adjusting the size of the graphene (refinement step).

Adjustment of the size of the plate-shaped conductive material can be performed by a conventional commonly known method. For example, adjustment of the size of graphene can be performed using a device such as a ball mill, a sand mill, a pigment disperser, a grinding machine, an ultrasonic disperser, or a homogenizer. Of these devices, it is particularly preferable to use a high-level dispersing device such as a bead mill, a roll mill, or a FILMIX since these devices can impart high shear force. Graphene tends to be refined to a greater extent through a higher shear force during treatment and a longer treatment time. Accordingly, by appropriately adjusting the type of refinement treatment, the treatment conditions, the treatment time, and so forth in a step of adjusting the size of the graphene (refinement step), it is possible to adjust the size of the graphene in terms of the maximum length in an in-plane direction of the graphene, the minimum length in an in-plane direction of the graphene, the thickness of the graphene, and so forth. It is also possible to adjust the size of the graphene through sphericity and the like of a feedstock (for example, natural graphite).

For a plate-shaped conductive material, a ratio of the maximum length (L1) in an in-plane direction of the plate-shaped conductive material relative to the thickness (T) of the plate-shaped conductive material (hereinafter, as referred to as the "L1/T" ratio) is preferably 5 or more, more preferably 10 or more, and even more preferably 20 or more, and is preferably 500 or less, more preferably 400 or less, and even more preferably 200 or less. When the L1/T ratio of the plate-shaped conductive material is not less than any of the lower limits set forth above, it is possible to more stably reduce internal resistance of an electrochemical device over a long period. Moreover, when the L1/T ratio of the plate-shaped conductive material is not more than any of the upper limits set forth above, dispersibility of a slurry for a positive electrode can be further improved.

The plate-shaped conductive material preferably has an aspect ratio in an in-plane direction of the plate-shaped conductive material of not less than 1 and not more than 5.

Note that the "aspect ratio in an in-plane direction of the plate-shaped conductive material" referred to in the present specification is a ratio (L1/L2) of the "maximum length (L1) in an in-plane direction of the plate-shaped conductive material" relative to the "minimum length (L2) in an in-plane direction of the plate-shaped conductive material".

The maximum length (L1) in an in-plane direction of the plate-shaped conductive material is preferably 0.1 μm or more, and more preferably 0.5 μm or more, and is preferably 10 μm or less, more preferably 8 μm or less, and even more preferably 5 μm or less. When the maximum length (L1) in an in-plane direction of the plate-shaped conductive material is not less than any of the lower limits set forth above, it is possible to further increase the solid content concentration of a slurry for an electrode that is produced using the presently disclosed paste. Moreover, when the maximum length in an in-plane direction of the plate-shaped conductive material is not more than any of the upper limits set forth above, it is possible to more stably reduce internal resistance of an electrochemical device over a long period.

The thickness (T) of the plate-shaped conductive material is preferably 0.3 nm or more, more preferably 0.5 nm or more, and even more preferably 0.8 nm or more, and is preferably 50 nm or less, more preferably 40 nm or less, and even more preferably 30 nm or less. When the thickness of the plate-shaped conductive material is not less than any of the lower limits set forth above, it is possible to further increase binding capacity of an electrode mixed material layer obtained using the presently disclosed paste. Moreover, when the thickness of the plate-shaped conductive material is not more than any of the upper limits set forth above, it is possible to more stably reduce internal resistance of an electrochemical device over a long period.

Note that the "maximum length (L1) in an in-plane direction of the plate-shaped conductive material", "minimum length (L2) in an in-plane direction of the plate-shaped conductive material", and "thickness (T) of the plate-shaped conductive material" can be calculated by taking a photograph using a scanning electron microscope (SEM) or the like and then measuring lengths using this photograph.

Specifically, the plate-shaped conductive material is first diluted to a proportional content of 0.002 mass% using N-methylpyrrolidone, and then this diluted liquid is treated at a rotation speed of 40 m/s for 30 seconds using a FILMIX® model 30-30 (FILMIX is a registered trademark in Japan, other countries, or both; produced by PRIMIX Corporation). Next, the diluted liquid is dripped onto a silicon substrate and is dried to cause attachment of the plate-shaped conductive material onto the substrate. The plate-shaped conductive material on the substrate is observed under ×30,000 magnification using an electron microscope S-4700 (produced by Hitachi High-Technologies Corporation), and the maximum length and minimum length in an in-plane direction of the plate-shaped conductive material (in-plane direction parallel to a graphene layer in a case in which the plate-shaped conductive material is graphene) and also the thickness are measured for each of 10 randomly selected plate-shaped conductive materials. Average values for the maximum length, minimum length, and thickness are respectively taken to be the "maximum length (L1) in an in-plane direction of the plate-shaped conductive material", "minimum length (L2) in an in-plane direction of the plate-shaped conductive material", and "thickness (T) of the plate-shaped conductive material".

«Proportional content of conductive material»

The proportional content of the conductive material in the presently disclosed paste when the mass of the overall paste is taken to be 100 mass% is required to be more than 2 mass%, is preferably 2.3 mass% or more, and is preferably 8 mass% or less, more preferably 6 mass% or less, and even more preferably 5 mass% or less. When the proportional content of the conductive material is more than any of the lower limits set forth above, binding capacity of an electrode mixed material layer obtained using the presently disclosed paste is ensured, and the electrode mixed material layer closely adheres strongly to a current collector. Moreover, when the proportional content of the conductive material is not more than any of the upper limits set forth above, device characteristics of an electrochemical device can be further improved.

The conductive material preferably includes the fibrous conductive material and other conductive materials in a mass ratio of 100:0 to 50:50, and more preferably 100:0 to 80:20. When the content ratio of the fibrous conductive material and other conductive materials in the conductive material is within any of the ranges set forth above, an electrode mixed material layer formed using the presently disclosed paste has even better electrical conductivity, and internal resistance of an electrochemical device can be more stably reduced over a long period.

A ratio of surface acid content relative to surface base content (surface acid content/surface base content) of the fibrous conductive material is preferably 0.1 or more, more preferably 0.15 or more, and even more preferably 0.2 or more, and is preferably 2.5 or less, more preferably 2.0 or less, and even more preferably 1.5 or less. When surface acid content/surface base content of the fibrous conductive material is not less than any of the lower limits set forth above, it is possible to further increase the solid content concentration of a slurry for an electrode that contains the presently disclosed paste and to increase productivity in formation of an electrode mixed material layer from this slurry for an electrode. Moreover, when surface acid content/surface base content of the fibrous conductive material is not more than any of the upper limits set forth above, it is possible to inhibit side reactions caused by the conductive material and to effectively suppress internal resistance increase of an electrochemical device.

The surface base content of the fibrous conductive material is preferably 0.005 mmol/g or more, and more preferably 0.006 mmol/g or more, and is preferably 0.1 mmol/g or less, and more preferably 0.095 mmol/g or less. When the surface base content is not less than any of the lower limits set forth above, residual acid components attached to the surface of the fibrous conductive material are reduced. It is also possible to suppress internal resistance increase of an electrochemical device, which is presumed to be due to inhibition of side reactions inside the electrochemical device. Moreover, when the surface base content is not more than any of the upper limits set forth above, it is possible to prevent aggregation of the conductive material that is presumed to be caused by reaction with acid components contained in a slurry for an electrode produced using the paste and to suppress internal resistance increase of an electrochemical device.

The surface acid content of the fibrous conductive material is preferably 0.01 mmol/g or more, and more preferably 0.015 mmol/g or more, and is preferably 0.2 mmol/g or less, and more preferably 0.16 mmol/g or less. When the surface acid content is not less than any of the lower limits set forth above, binding capacity of an electrode mixed material layer obtained using the presently disclosed paste can be sufficiently ensured, and the electrode mixed material layer can closely adhere strongly to a current collector. It is also possible to more effectively suppress internal resistance increase of an electrochemical device. Moreover, when the surface acid content is not more than any of the upper limits set forth above, it is possible to even more effectively suppress internal resistance increase of an electrochemical device, which is presumed to be due to the amount of residual acid components attached to the surface of the fibrous conductive material being reduced and side reactions being sufficiently inhibited in the electrochemical device.

<Polymer A>

The polymer A can function as a component that, in an electrode mixed material layer formed on a current collector using a slurry for an electrode that contains the presently disclosed paste, holds components contained in the electrode mixed material layer so that these components do not detach from the electrode mixed material layer (i.e., can function as a binder).

The polymer A is required to include a nitrile group-containing monomer unit and an alkylene structural unit and may optionally further include repeating units other than the nitrile group-containing monomer unit and the alkylene structural unit (hereinafter, referred to as "other repeating units").

[Nitrile group-containing monomer unit]

The nitrile group-containing monomer unit is a repeating unit that is derived from a nitrile group-containing monomer. As a result of the polymer A including the nitrile group-containing monomer unit, an electrode mixed material layer that is formed using the presently disclosed paste displays excellent binding capacity. Moreover, an electrode for an electrochemical device that includes this electrode mixed material layer displays excellent flexibility.

Examples of nitrile group-containing monomers that can form the nitrile group-containing monomer unit include $\alpha,\beta$-ethylenically unsaturated nitrile monomers. Specifically, any $\alpha,\beta$-ethylenically unsaturated compound that has a nitrile group can be used as an $\alpha,\beta$-ethylenically unsaturated nitrile monomer without any specific limitations. Examples include acrylonitrile; $\alpha$-halogenoacrylonitriles such as $\alpha$-chloroacrylonitrile and $\alpha$-bromoacrylonitrile; and $\alpha$-alkylacrylonitriles such as methacrylonitrile and $\alpha$-ethylacrylonitrile. Of these examples, acrylonitrile and methacrylonitrile are preferable as nitrile group-containing monomers from a viewpoint of increasing solubility of the polymer A in a pyrrolidone-based solvent, and acrylonitrile is more preferable as a nitrile group-containing monomer. One of these nitrile group-containing monomers may be used individually, or two or more of these nitrile group-containing monomers may be used in combination.

The proportional content of nitrile group-containing monomer units in the polymer A when all repeating units in the polymer A (total of monomer units and structural units) are taken to be 100 mass% is preferably 10 mass% or more, more preferably 20 mass% or more, and even more preferably 30 mass% or more, and is preferably 50 mass% or less, and more preferably 40 mass% or less. When the proportional content of nitrile group-containing monomer units in the polymer A is not less than any of the lower limits set forth above, it is possible to increase the solid content concentration of a slurry for an electrode produced using the presently disclosed paste and to increase productivity in formation of an electrode mixed material layer from the slurry for an electrode. It is also possible to sufficiently increase binding capacity of an electrode mixed material layer obtained using the paste for an electrode. Moreover, when the proportional content of nitrile group-containing monomer units in the polymer A is not more than any of the upper limits set forth above, it is possible to improve a swelling property of the polymer A in electrolyte solution and to effectively suppress internal resistance increase of an electrochemical device.

[Alkylene structural unit]

The alkylene structural unit is a repeating unit that is composed of only an alkylene structure represented by a general formula $-C_nH_{2n}-$ (n is an integer of 2 or more). As a result of the polymer A including the alkylene structural unit, it is possible to produce an electrochemical device having reduced internal resistance using the presently disclosed paste.

Although the alkylene structural unit may be linear or branched, the alkylene structural unit is preferably linear (i.e., is preferably a linear alkylene structural unit) from a viewpoint of improving preservation stability of a conductive material dispersion liquid.

No specific limitations are placed on the method by which the alkylene structural unit is introduced into the polymer. For example, method (1) or (2) described below may be used.

(1) A method in which a polymer is produced from a monomer composition containing a conjugated diene monomer and then the polymer is hydrogenated in order to convert a conjugated diene monomer unit to an alkylene structural unit

(2) A method in which a polymer is produced from a monomer composition containing a 1-olefin monomer

Of these methods, method (1) is preferable in terms of ease of production of the polymer A.

The conjugated diene monomer may be a conjugated diene compound having a carbon number of 4 or more such as 1,3-butadiene, isoprene, 2,3-dimethyl-1,3-butadiene, or 1,3-pentadiene, for example. Of these conjugated diene monomers, 1,3-butadiene is preferable. In other words, the alkylene structural unit is preferably a structural unit obtained through hydrogenation of a conjugated diene monomer unit (i.e., is preferably a hydrogenated conjugated diene unit), and is more preferably a structural unit obtained through hydrogenation of a 1,3-butadiene monomer unit (i.e., is more preferably a hydrogenated 1,3-butadiene unit).

The 1-olefin monomer may be ethylene, propylene, 1-butene, or the like, for example.

One of these conjugated diene monomers or 1-olefin monomers may be used individually, or two or more of these conjugated diene monomers or 1-olefin monomers may be used in combination.

The proportional content of alkylene structural units in the polymer A when all repeating units in the polymer (total of monomer units and structural units) are taken to be 100 mass% is preferably 30 mass% or more, more preferably 50 mass% or more, and even more preferably 60 mass% or more, and is preferably 80 mass% or less, more preferably 75 mass% or less, and even more preferably 70 mass% or less. When the proportional content of alkylene structural units in the polymer A is not less than any of the lower limits set forth above, it is possible to further improve a swelling property of the polymer A in electrolyte solution and to even more effectively suppress internal resistance increase of an electrochemical device. Moreover, when the proportional content of alkylene structural units in the polymer A is not more than any of the upper limits set forth above, it is possible to increase the solid content concentration of a slurry for an electrode produced using the presently disclosed paste. Moreover, productivity can be further increased in formation of an electrode mixed material layer from this slurry for an electrode. Furthermore, binding capacity of an electrode mixed material layer that is obtained using the paste for an electrode is sufficiently ensured, and this electrode mixed material layer can closely adhere to a current collector more strongly.

[Other repeating units]

Repeating units derived from known monomers that are copolymerizable with the above-described monomers can be included without any specific limitations as other repeating units in addition to the nitrile group-containing monomer unit and alkylene structural unit described above. For example, a (meth)acrylic acid ester monomer unit, a hydrophilic group-containing monomer unit, or the like may be included as another repeating unit. Examples of other repeating units also include aromatic vinyl monomer units derived from aromatic vinyl monomers such as styrene, $\alpha$-methylstyrene, butoxystyrene, and vinylnaphthalene. One of these monomers may be used individually, or two or more of these monomers may be used in combination. In the present disclosure, "(meth)acryl" is used to indicate "acryl" and/or "methacryl".

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate.

Examples of hydrophilic group-containing monomers that can form a hydrophilic group-containing monomer unit include polymerizable monomers that have a hydrophilic group. Specific examples of hydrophilic group-containing monomers include carboxy group-containing monomers, sulfo group-containing monomers, phosphate group-containing monomers, and hydroxy group-containing monomers.

Examples of carboxy group-containing monomers include monocarboxylic acids, derivatives of monocarboxylic acids, dicarboxylic acids, acid anhydrides of dicarboxylic acids, and derivatives of these dicarboxylic acids and acid anhydrides.

Examples of monocarboxylic acids include acrylic acid, methacrylic acid, and crotonic acid.

Examples of derivatives of monocarboxylic acids include 2-ethylacrylic acid, isocrotonic acid, $\alpha$-acetoxyacrylic acid, $\beta$-trans-aryloxyacrylic acid, $\alpha$-chloro-$\beta$-E-methoxyacrylic acid, and $\beta$-diaminoacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid esters such as methyl allyl maleate, diphenyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Furthermore, an acid anhydride that produces a carboxy group through hydrolysis can also be used as a carboxy group-containing monomer.

Other examples include monoesters and diesters of $\alpha,\beta$-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

Examples of sulfo group-containing monomers include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

In the present disclosure, "(meth)allyl" is used to indicate "allyl" and/or "methallyl".

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

In the present disclosure, "(meth)acryloyl" is used to indicate "acryloyl" and/or "methacryloyl".

Examples of hydroxy group-containing monomers include ethylenically unsaturated alcohols such as (meth)allyl alcohol, 3-buten-1-ol, and 5-hexen-1-ol; alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula $CH_2=CR^1-COO-(C_qH_{2q}O)_p-H$ (where p represents an integer of 2 to 9, q represents an integer of 2 to 4, and $R^1$ represents a hydrogen atom or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

The proportional content of other repeating units in the polymer A is preferably 40 mass% or less, more preferably 25 mass% or less, even more preferably 10 mass% or less, and particularly preferably 1 mass% or less, and it is most preferable that the polymer A does not include other repeating units. In other words, the polymer A is preferably composed of only nitrile group-containing monomer units and alkylene structural units.

[Mooney viscosity ($ML_{1+4}$, 100°C)]

The Mooney viscosity ($ML_{1+4}$, 100°C) of the polymer A is required to be 70 or more, and is preferably 80 or more, and more preferably 100 or more. Moreover, the Mooney viscosity ($ML_{1+4}$, 100°C) of the polymer A is required to be 150 or less, and is preferably 140 or less, and more preferably 130 or less. When the Mooney viscosity of the polymer A is not less than any of the lower limits set forth above, strength of the polymer A improves, which makes it possible to sufficiently ensure binding capacity of an electrode mixed material layer obtained using the paste and for the electrode mixed material layer to closely adhere strongly to a current collector. It is also possible to effectively reduce internal resistance of an electrochemical device over a long period. Moreover, when the Mooney viscosity of the polymer A is not more than any of the upper limits set forth above, viscosity of the paste improves. It is also possible to further increase the solid content concentration of a slurry for an electrode produced using the paste and to further increase productivity in formation of an electrode mixed material layer from the slurry for an electrode.

Note that the Mooney viscosity of the polymer A can be adjusted by altering the chemical composition, structure (for example, linear fraction), molecular weight, and gel content of the polymer A, the production conditions of the polymer A (for example, the used amount of chain transfer agent, the polymerization temperature, and the conversion rate at the end of polymerization), and so forth. In one specific example, increasing the amount of chain transfer agent used in production of the polymer A reduces the Mooney viscosity of the polymer A.

[Iodine value]

The iodine value of the polymer A is preferably 0.01 mg/100 mg or more, and is preferably 70 mg/100 mg or less, more preferably 60 mg/100 mg or less, and even more preferably 30 mg/100 mg or less. When the iodine value of the polymer A is within any of the ranges set forth above, viscosity of the presently disclosed paste improves. This makes it possible to increase the solid content concentration of a slurry for an electrode produced using the paste. Moreover, productivity can be increased in formation of an electrode mixed material layer from this slurry for an electrode. Furthermore, there is better electrical conductivity in the electrode mixed material layer, which makes it possible to effectively suppress internal resistance increase of an electrochemical device.

[Production method of polymer A]

No specific limitations are placed on the method by which the polymer A described above is produced. For example, the polymer A can be produced by performing polymerization of a monomer composition containing the above-described monomers, optionally in the presence of a chain transfer agent, to obtain a polymer, and subsequently hydrogenating the obtained polymer.

The proportional content of each monomer in the monomer composition used to produce the polymer A can be set in accordance with the proportional content of each repeating unit in the polymer A.

The polymerization method is not specifically limited and may, for example, be any of solution polymerization, suspension polymerization, bulk polymerization, and emulsion polymerization. Examples of types of polymerization reactions that can be used include ionic polymerization, radical polymerization, and living radical polymerization.

The hydrogenation method of the polymer is also not specifically limited and may be a typical method using a catalyst (for example, refer to WO2012/165120A1, WO2013/080989A1, and JP2013-8485A).

«Proportional content of polymer A»

The proportional content of the polymer A in the paste is required to be more than 50 parts by mass, and is preferably 60 parts by mass or more per 100 parts by mass of the conductive material. Moreover, the proportional content of the polymer A in the paste is required to be 200 parts by mass or less, and is preferably 150 parts by mass or less, and more preferably 120 parts by mass or less per 100 parts by mass of the conductive material. When the proportional content of the polymer A is not less than any of the lower limits set forth above, the conductive material can be dispersed well in the paste. Consequently, binding capacity of an electrode mixed material layer obtained using this paste is sufficiently ensured, and the electrode mixed material layer can closely adhere strongly to a current collector. Moreover, when the proportional content of the polymer A is not more than any of the upper limits set forth above, it is possible to suppress internal resistance increase of an electrochemical device over a long period.

<Dispersion medium>

The dispersion medium is not specifically limited but is preferably an organic solvent from a viewpoint of being suitable for use in production of a slurry for an electrode. Examples of organic solvents that may be used include alcohols such as methanol, ethanol, n-propanol, isopropanol, n-butanol, isobutanol, t-butanol, pentanol, hexanol, heptanol, octanol, nonanol, decanol, and amyl alcohol; ketones such as acetone, methyl ethyl ketone, and cyclohexanone; esters such as ethyl acetate and butyl acetate; ethers such as diethyl ether, dioxane, and tetrahydrofuran; amide polar organic solvents such as N,N-dimethylformamide and N-methylpyrrolidone (NMP); and aromatic hydrocarbons such as toluene, xylene, chlorobenzene, orthodichlorobenzene, and paradichlorobenzene. One of these organic solvents may be used individually, or two or more of these organic solvents may be used as a mixture. Of these organic solvents, NMP is preferable as the dispersion medium.

<Other components>

Examples of other components that may be mixed in include viscosity modifiers, reinforcing materials, antioxidants, and additives for electrolyte solution having a function of inhibiting electrolyte solution decomposition. Commonly known examples of these components can be used. One of these other components may be used individually, or two or more of these other components may be used in combination. Note that the presently disclosed paste does not normally contain an electrode active material (positive electrode active material or negative electrode active material).

(Production method of paste for electrochemical device)

No specific limitations are placed on the method by which the presently disclosed paste is produced. For example, the presently disclosed paste can be produced by a method including a step of performing acid treatment of a feedstock conductive material (acid treatment step), a step of performing base treatment of the feedstock conductive material that has undergone acid treatment (base treatment step), a step of washing the feedstock conductive material that has undergone base treatment to obtain a conductive material (surface-treated conductive material) having specific properties (washing step), and a step of mixing a conductive material that includes the surface-treated conductive material with a polymer and the previously described dispersion medium (mixing step). By adopting this method, it is possible to efficiently produce the presently disclosed paste.

<Acid treatment step>

In the acid treatment step, a feedstock conductive material is subjected to acid treatment. A conductive material that includes the previously described fibrous conductive material is used as the feedstock conductive material.
Although no specific limitations are placed on the method of acid treatment so long as an acid can be brought into contact with the feedstock conductive material, a method in which the feedstock conductive material is immersed in an acid treatment solution (aqueous solution of an acid) is preferable.
The acid that is contained in the acid treatment solution may be nitric acid, sulfuric acid, or hydrochloric acid, for example, without any specific limitations. One of these acids may be used individually, or two or more of these acids may be used in combination. Of these acids, nitric acid and sulfuric acid are preferable.
The time for which the feedstock conductive material is immersed in the acid treatment solution (immersion time) is preferably 1 minute or more, more preferably 10 minutes or more, even more preferably 30 minutes or more, and particularly preferably 50 minutes or more, and is preferably 120 minutes or less, more preferably 100 minutes or less, and even more preferably 80 minutes or less. The surface acid content of the surface-treated conductive material can be increased when the immersion time is 1 minute or more, whereas the surface acid content of the surface-treated conductive material does not excessively increase and production efficiency of the paste is sufficiently ensured when the immersion time is 120 minutes or less.

The temperature when the feedstock conductive material is immersed in the acid treatment solution (immersion temperature) is preferably 20°C or higher, and more preferably 40°C or higher, and is preferably 80°C or lower, and more preferably 70°C or lower. When the immersion temperature is within any of the ranges set forth above, the surface acid content of the obtained surface-treated conductive material can be increased to a suitable degree.

After this immersion, the conductive material that has undergone the acid treatment step (acid-treated conductive material) can be collected from a mixture of the acid-treated conductive material and the acid treatment solution by a known technique such as filtration. The acid-treated conductive material that is collected may then be washed with water as necessary.

<Base treatment step>

In the base treatment step, the acid-treated conductive material that has been obtained through the acid treatment step described above is subjected to base treatment.

Although no specific limitations are placed on the method of base treatment so long as a base can be brought into contact with the acid-treated conductive material, a method in which the acid-treated conductive material is immersed in a base treatment solution (aqueous solution of a base) is preferable.

The base contained in the base treatment solution may be lithium hydroxide, ammonium chloride, sodium bicarbonate, or sodium hydroxide, for example, without any specific limitations. One of these bases may be used individually, or two or more of these bases may be used in combination. Of these bases, lithium hydroxide and ammonium chloride are preferable, and lithium hydroxide is more preferable.

The time for which the acid-treated conductive material is immersed in the base treatment solution (immersion time) is preferably 10 minutes or more, more preferably 60 minutes or more, even more preferably 80 minutes or more, and particularly preferably 90 minutes or more, and is preferably 240 minutes or less, more preferably 200 minutes or less, and even more preferably 150 minutes or less. The surface base content of the surface-treated conductive material can be increased when the immersion time is 10 minutes or more, whereas the surface base content of the surface-treated conductive material does not excessively increase and production efficiency of the paste is sufficiently ensured when the immersion time is 240 minutes or less.

The temperature when the acid-treated conductive material is immersed in the base treatment solution (immersion temperature) is preferably 10°C or higher, and more preferably 20°C or higher, and is preferably 40°C or lower, and more preferably 27°C or lower. When the immersion temperature is within any of the ranges set forth above, the surface base content of the obtained surface-treated conductive material can be increased to a suitable degree.

<Washing step>

In the washing step, the feedstock conductive material that has been obtained through the acid treatment step and base treatment step described above (i.e., an acid/base-treated conductive material) is washed. This washing can remove excess acid components and base components (particularly base components) attached to the surface of the acid/base-treated conductive material and makes it possible to obtain a surface-treated conductive material having specific properties.

Although no specific limitations are placed on the method by which the acid/base-treated conductive material is washed, water washing is preferable. For example, the acid/base-treated conductive material may be collected from a mixture of the acid/base-treated conductive material and the base treatment solution by a known technique such as filtration and this acid/base-treated conductive material may be washed with water. In this washing, it is possible to estimate to what extent acid components and base components have been removed by measuring the electrical conductivity of water (washing water) that has been used to wash the acid/base-treated conductive material.

After the washing step described above, removal of surface-attached water by drying and the like may be performed as necessary to obtain the surface-treated conductive material.

Note that the surface acid content and/or the surface base content of the surface-treated conductive material can be adjusted by altering conditions of the acid treatment step and/or base treatment step and the washing step described above. For example, the surface acid content and/or the surface base content of the surface-treated conductive material can be adjusted by altering the types and concentrations of the acid and/or base contained in the acid treatment solution and/or base treatment solution used in the acid treatment step and/or base treatment step. Moreover, the surface acid content of the surface-treated conductive material can be increased by increasing the immersion time in the acid treatment step. Furthermore, the surface base content of the surface-treated conductive material can be increased by increasing the immersion time in the base treatment step. Also, the surface acid content and the surface base content (particularly the surface base content) can be adjusted by altering the extent to which washing is performed in the washing step.

<Mixing step>

In the mixing step, the surface-treated conductive material obtained as described above is mixed with a polymer, a dispersion medium, and other conductive materials and/or other components that are used as necessary. The mixing method in the mixing step is not specifically limited and may involve using a typical mixing device such as a disper blade, a mill, or a kneader.

(Slurry for electrochemical device electrode)

The presently disclosed slurry for an electrochemical device electrode contains an electrode active material and the presently disclosed paste set forth above. In addition, the presently disclosed slurry for an electrode may contain a polymer B as a polymer other than the previously described polymer A. In other words, the presently disclosed slurry for an electrode contains an electrode active material, a conductive material that includes a fibrous conductive material, the polymer A, and a dispersion medium, and may optionally further contain other conductive materials, other components, and the polymer B.

By using the presently disclosed slurry for an electrode to form an electrode mixed material layer, it is possible to obtain an electrode that can reduce internal resistance of an electrochemical device to a low level over a long period and can cause the electrochemical device to display excellent device characteristics as a result of the presently disclosed slurry for an electrode being produced using the presently disclosed paste.

<Electrode active material>

The electrode active material is a material that gives and receives electrons in an electrode of an electrochemical device. Known electrode active materials that are used in electrochemical devices can be used as the electrode active material without any specific limitations.

Although the following describes, as one example, a case in which the slurry for an electrode is a slurry for a lithium ion secondary battery positive electrode, the present disclosure is not limited to the following example.

<<Positive electrode active material>>

Examples of positive electrode active materials that can be compounded in a positive electrode mixed material layer of a positive electrode in a lithium ion secondary battery include transition metal-containing compounds such as transition metal oxides, transition metal sulfides, and complex metal oxides of lithium and transition metals. Examples of the transition metal include Ti, V, Cr, Mn, Fe, Co, Ni, Cu, and Mo.

More specific examples of positive electrode active materials include, but are not specifically limited to, lithium-containing cobalt oxide ($LiCoO_2$), lithium manganate ($LiMn_2O_4$), lithium-containing nickel oxide ($LiNiO_2$), a lithium-containing complex oxide of Co-Ni-Mn, a lithium-containing complex oxide of Ni-Mn-Al, a lithium-containing complex oxide of Ni-Co-Al, olivine-type lithium iron phosphate ($LiFePO_4$), olivine-type lithium manganese phosphate ($LiMnPO_4$), a lithium-rich spinel compound represented by $Li_{1+x}Mn_{2-x}O_4$ ($0 < x < 2$), $Li[Ni_{0.17}Li_{0.2}Co_{0.07}Mn_{0.56}]O_2$, and $LiNi_{0.5}Mn_{1.5}O_4$.

The particle diameter of the positive electrode active material is not specifically limited and may be the same as that of a conventionally used positive electrode active material. Moreover, one positive electrode active material may be used individually, or two or more positive electrode active materials may be used in combination.

The proportional content of the positive electrode active material in the slurry for a positive electrode is not specifically limited but is preferably not less than 90 mass% and not more than 99 mass% when all solid content in the slurry for a positive electrode is taken to be 100 mass%.

<Paste for electrochemical device>

The presently disclosed paste set forth above that contains a conductive material including a fibrous conductive material, the polymer A, and a dispersion medium and that optionally contains other conductive materials and/or other components is used as a paste for an electrochemical device.

(Polymer B)

The polymer B that may be contained in the presently disclosed slurry for an electrode is not specifically limited so long as it is a polymer other than the polymer A. The polymer B may, for example, be polyacrylonitrile (PAN), polyvinyl alcohol (PVOH), or a fluorine-containing resin such as polyvinylidene fluoride (PVdF), of which, a fluorine-containing resin is preferable. One type of polymer B may be used individually, or two or more types of polymers B may be used in combination.

<Production of slurry for electrochemical device electrode>

The presently disclosed slurry for an electrochemical device electrode can be produced by mixing the above-described electrode active material and the above-described paste for an electrochemical device. The mixing method is not specifically limited and may involve using a typical mixing device such as a disper blade, a mill, or a kneader.
The proportional content of the conductive material in the slurry for an electrode is not specifically limited but is preferably not less than 0.4 mass% and not more than 5 mass% when all solid content in the slurry for an electrode is taken to be 100 mass%.
The proportional content of the polymer A in the slurry for an electrode is also not specifically limited but is preferably not less than 0.01 mass% and not more than 2 mass% when all solid content in the slurry for an electrode is taken to be 100 mass%.
The proportion constituted by the polymer B in the slurry for an electrode when the total content of the polymer A and the polymer B in the slurry for an electrode is taken to be 100 mass% is preferably 50 mass% or less, preferably 40 mass% or less, and more preferably 20 mass% or less. When the proportional content of the polymer B is not more than any of the upper limits set forth above, the solid content concentration of the slurry for an electrode can be increased. In addition, it is possible to increase productivity in formation of an electrode mixed material layer from the slurry for an electrode and also to improve interactions between the electrode active material and the conductive material and obtain an electrochemical device having excellent device characteristics.

(Electrode for electrochemical device)

The presently disclosed electrode for an electrochemical device includes an electrode mixed material layer formed using the presently disclosed slurry for an electrode set forth above.
The presently disclosed electrode for an electrochemical device can be formed by, for example, applying the presently disclosed slurry for an electrode set forth above onto the surface of a current collector to form a coating film and subsequently drying the coating film that is formed. In other words, the electrode mixed material layer included in the presently disclosed electrode is formed of a dried product of the presently disclosed slurry for an electrode set forth above, contains an electrode active material, a conductive material including a fibrous conductive material, and the polymer A, and optionally further contains other conductive materials, other components, and the polymer B. It should be noted that components contained in the electrode mixed material layer are components that were contained in the slurry for an electrode set forth above and the preferred ratio of these components is normally the same as the preferred ratio of the components in the slurry for an electrode.
By using the presently disclosed electrode for an electrochemical device, it is possible to reduce internal resistance of an electrochemical device over a long period while also causing the electrochemical device to display excellent device characteristics as a result of the presently disclosed electrode including an electrode mixed material layer that has been formed from the slurry for an electrode set forth above.

(Production method of electrode for electrochemical device)

The electrode mixed material layer of the presently disclosed electrode for an electrochemical device can be formed on a current collector through a step of applying the slurry for an electrode set forth above onto the current collector (application step) and a step of drying the slurry for an electrode that has been applied onto the current collector so as to form an electrode mixed material layer on the current collector (drying step), for example.

[Application step]

The method by which the slurry for an electrode is applied onto the current collector is not specifically limited and may be a commonly known method. Specific examples of application methods that can be used include doctor blading, dip coating, reverse roll coating, direct roll coating, gravure coating, extrusion coating, and brush coating. During application, the slurry may be applied onto one side or both sides of the current collector. The thickness of the slurry coating on the current collector after application but before drying may be set as appropriate in accordance with the thickness of the electrode mixed material layer to be obtained after drying.

The current collector onto which the slurry for an electrode is applied is a material having electrical conductivity and electrochemical durability. Specifically, the current collector may, for example, be made of iron, copper, aluminum, nickel, stainless steel, titanium, tantalum, gold, platinum, or the like. One of these materials may be used individually, or two or more of these materials may be used in combination in a freely selected ratio.

[Drying step]

The slurry for an electrode on the current collector may be dried by any commonly known method without any specific limitations. Examples of drying methods that can be used include drying by warm, hot, or low-humidity air; drying in a vacuum; and drying by irradiation with infrared light, electron beams, or the like. Through drying of the slurry for an electrode on the current collector as described above, an electrode mixed material layer is formed on the current collector, thereby providing an electrode for an electrochemical device that includes the current collector and the electrode mixed material layer.

After the drying step, the electrode mixed material layer may be further subjected to a pressing process, such as mold pressing or roll pressing. This pressing process can improve peel strength of the electrode. Moreover, by performing heating to the glass-transition temperature of a polymer or higher during the pressing process, it is possible to further increase the density of the electrode mixed material layer while also even further improving peel strength of the electrode. Furthermore, in a case in which the electrode mixed material layer contains a curable polymer, the polymer is preferably cured after the electrode mixed material layer has been formed.

(Electrochemical device)

The presently disclosed electrochemical device may be, but is not specifically limited to, a lithium ion secondary battery or an electric double-layer capacitor, and is preferably a lithium ion secondary battery. As a result of the presently disclosed electrochemical device including the presently disclosed electrode for an electrochemical device set forth above, it is possible to reduce internal resistance of the electrochemical device over a long period.

Although the following describes, as one example, a case in which the electrochemical device is a lithium ion secondary battery, the present disclosure is not limited to the following example.

A lithium ion secondary battery that is an example of the presently disclosed electrochemical device normally includes a positive electrode, a negative electrode, an electrolyte solution, and a separator, wherein at least one of the positive electrode and the negative electrode is the presently disclosed electrode for an electrochemical device set forth above.

<Electrodes>

Examples of electrodes other than the electrode for an electrochemical device set forth above that can be used in the lithium ion secondary battery that is an example of the presently disclosed electrochemical device include known electrodes without any specific limitations. Specifically, an electrode obtained by forming an electrode mixed material layer on a current collector by a known production method may be used as an electrode other than the electrode for an electrochemical device set forth above.

<Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation, with $LiPF_6$ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of suitable organic solvents include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

Moreover, a known additive such as vinylene carbonate (VC), fluoroethylene carbonate (FEC), or ethyl methyl sulfone may be added to the electrolyte solution.

<Separator>

Examples of separators that can be used include, but are not specifically limited to, those described in JP2012-204303A. Of these separators, a microporous membrane formed of polyolefinic (polyethylene, polypropylene, polybutene, or polyvinyl chloride) resin is preferred since such a membrane can reduce the total thickness of the separator, which increases the ratio of electrode active material in the lithium ion secondary battery, and consequently increases the volumetric capacity.

<Production method of lithium ion secondary battery>

The lithium ion secondary battery that is an example of the presently disclosed electrochemical device can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like, for example.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

Furthermore, in the case of a polymer that is a hydrogenated polymer obtained through hydrogenation of a polymerized product including conjugated diene monomer units, the total proportional content of non-hydrogenated conjugated diene monomer units and alkylene structural units that are hydrogenated conjugated diene monomer units in the hydrogenated polymer is the same as the ratio (charging ratio) of a conjugated diene monomer among all monomers used in polymerization of the polymerized product.

In the examples and comparative examples, the following methods were used to measure and evaluate surface acid content, surface base content, ratio of surface acid content relative to surface base content, BET specific surface area, dispersibility of a paste, solid content concentration of a slurry for a positive electrode, sedimentation resistance of a slurry for a positive electrode, binding capacity, and rate of resistance increase after a cycling test.

<Surface acid content>

Approximately 1 g of surface-treated CNTs were precisely weighed, were then immersed in 100 mL of 0.01 mol $dm^{-3}$ tetrabutylhydride (TBA OH)/4-methyl-2-pentanone (MIBK) solution, and were stirred by a stirrer for 1 hour. Thereafter, centrifugal separation was performed, and the supernatant was filtered using a filter. Residual TBA OH in 50 mL of the resultant filtrate was quantitatively analyzed by performing non-aqueous coulometric titration with 0.01 mol $dm^{-3}$ perchloric acid ($HClO_4$)/MIBK solution, and then the acid content (mmol/g) per 1 g of surface-treated CNTs was determined from the obtained value. Note that this analysis was performed using an automatic coulometric titrator (produced by Kyoto Electronics Manufacturing Co., Ltd.; product name: AT-700). Also note that this sequence of operations was performed under argon gas flow at room temperature.

<Surface base content>

Approximately 1 g of surface-treated CNTs were precisely weighed, were then immersed in 100 mL of 0.01

mol dm$^{-3}$ HClO$_4$/MIBK solution, and were stirred by a stirrer for 1 hour. Thereafter, centrifugal separation was performed, and the supernatant was filtered using a filter. Residual HClO$_4$ in 50 mL of the resultant filtrate was quantitatively analyzed by performing non-aqueous coulometric titration with 0.01 mol dm$^{-3}$ TBA OH/MIBK solution, and then the base content (mmol/g) per 1 g of surface-treated CNTs was determined from the obtained value. Note that this analysis was performed using an automatic coulometric titrator (produced by Kyoto Electronics Manufacturing Co., Ltd.; product name: AT-700). Also note that this sequence of operations was performed under argon gas flow at room temperature.

<Ratio of surface acid content relative to surface base content>

A ratio of surface acid content relative to surface base content of surface-treated CNTs serving as a fibrous conductive material was determined by the following formula.

$$\text{Ratio of surface acid content relative to surface base content of surface-treated CNTs} = \text{Surface acid content of surface-treated CNTs/Surface base content of surface-treated CNTs}$$

<BET specific surface area>

Measurement of BET specific surface area was performed using a Belsorp-mini (produced by MicrotracBEL Corp.; conforming with ASTM D3037-81).

<Dispersibility of paste>

The viscosity (initial viscosity) of a paste for a lithium ion secondary battery straight after production was measured using a rheometer (MCR 302 produced by Anton Paar) under conditions of a temperature of 25°C and a shear rate of 0.1 s$^{-1}$ for 120 seconds. An average value of measured values for from 61 seconds to 120 seconds was used to make an evaluation as indicated below.

A smaller value for the viscosity indicates that the paste has less structural viscosity and better dispersibility.

A: Viscosity of less than 40 Pa·s
B: Viscosity of not less than 40 Pa·s and less than 50 Pa·s
C: Viscosity of not less than 50 Pa·s and less than 60 Pa·s
D: Viscosity of 60 Pa·s or more

<Solid content concentration of slurry for positive electrode>

With respect to a slurry for a positive electrode that was produced such as to have a viscosity of 4,000 mPa·s as measured by a B-type viscometer (rotation speed: 60 rpm) at 25°C, the solid content concentration of the slurry for a positive electrode was determined and was evaluated by the following standard.

A higher solid content concentration indicates that an electrode active material and a conductive material can be dispersed in higher concentration in the slurry for a positive electrode and that the slurry for a positive electrode has better dispersibility.

A: Solid content concentration of 75 mass% or more
B: Solid content concentration of not less than 70 mass% and less than 75 mass%
C: Solid content concentration of less than 70 mass%

<Sedimentation resistance of slurry for positive electrode>

A test sample was prepared by loading a slurry for a positive electrode into a test tube of 1 cm in diameter up to a height of 5 cm. Note that 5 test samples were prepared for each example or comparative example. The test samples were set up vertically on a desk, and the state of the slurry for a positive electrode was observed for 10 days. Sedimentation of the slurry for a positive electrode was evaluated by the following standard. A longer time until separation of the slurry for a positive electrode into two phases is observed indicates that the slurry for a positive electrode has better sedimentation resistance.

A: Two-phase separation observed after 8 to 10 days
B: Two-phase separation observed after 5 to 7 days
C: Two-phase separation observed after 2 to 4 days
D: Two-phase separation observed after 1 day

<Binding capacity>

A produced positive electrode for a secondary battery was cut out as 100 mm in length and 10 mm in width to obtain a test specimen. The test specimen was placed with the surface at which the electrode mixed material layer was present facing downward, and cellophane tape (tape in accordance with JIS Z1522) was affixed to the electrode surface. One end of the current collector was pulled and peeled off in a perpendicular direction at a peeling speed of 50 mm/min, and the stress during this peeling was measured (note that the cellophane tape was fixed to a test stage). Three measurements were made in this manner. An average value of the measurements was determined and was taken to be the binding strength in order to evaluate binding capacity by the following standard.

A larger binding strength indicates that the positive electrode mixed material layer is closely adhered to the current collector more strongly and has better binding capacity.

A: Binding strength of 15 N/m or more
B: Binding strength of not less than 10 N/m and less than 15 N/m
C: Binding strength of not less than 5 N/m and less than 10 N/m
D: Binding strength of less than 5 N/m

<Rate of resistance increase after cycling test>

A lithium ion secondary battery was charged to an SOC (State Of Charge) of 50% at 1C (C is a value expressed by rated capacity (mA)/1 hour (hr)) in a 25°C atmosphere. The lithium ion secondary battery was subsequently subjected to 20 seconds of charging and 20 seconds of discharging centered around an SOC of 50% at each of 0.2C, 0.5C, 1.0C, 2.0C, and 3.0C in a 25°C environment. The battery voltage after 20 seconds in each case (charging side and discharging side) was plotted against the current value, and the gradient of this plot was determined as the IV resistance ($\Omega$) (IV resistance during charging and IV resistance during discharging) and was taken to be the pre-cycling test IV resistance ($\Omega$).

The lithium ion secondary battery was subsequently subjected to a cycling test in which an operation of charging to a battery voltage of 4.2 V at 1C and discharging to a battery voltage of 3.0 V at 1C was repeated 200 times in a 45°C atmosphere.

The IV resistance ($\Omega$) was then determined by the same method as described above and was taken to be the post-cycling test IV resistance ($\Omega$).

The rate of change (%) of the obtained value ($\Omega$) for post-cycling test IV resistance was calculated based on the value ($\Omega$) for pre-cycling test IV resistance. An evaluation was made by the following standard based on this rate of change (%) and the value ($\Omega$) for post-cycling test IV resistance.

A smaller rate of change (%) of IV resistance between before and after the cycling test and a smaller value ($\Omega$) for post-cycling test IV resistance indicate that internal resistance is reduced over a long period and that the lithium ion secondary battery has better battery characteristics.

A: IV resistance rate of change of less than 30% and post-cycling test IV resistance value of less than 2.5 $\Omega$
B: IV resistance rate of change of not less than 30% and less than 35% and post-cycling test IV resistance value of less than 2.8 $\Omega$
C: IV resistance rate of change of not less than 35% and less than 40% and post-cycling test IV resistance value of less than 3.2 $\Omega$
D: IV resistance rate of change of 40% or more

(Example 1)

<Production of polymer A>

A reactor was charged with 180 parts of deionized water, 25 parts of sodium dodecylbenzenesulfonate aqueous solution (concentration 10%) as an emulsifier, 35 parts of acrylonitrile as a nitrile group-containing monomer, and 0.25 parts of t-dodecyl mercaptan as a chain transfer agent in order. Next, gas inside of the reactor was purged three times with nitrogen, and then 65 parts of 1,3-butadiene was added as a conjugated diene monomer. The reactor was held at 10°C while 0.1 parts of cumene hydroperoxide as a polymerization initiator and appropriate amounts of a reductant and a chelating agent were added and a polymerization reaction was continued under stirring. At the point at which the polymerization conversion rate reached 85%, 0.1 parts of hydroquinone aqueous solution (concentration 10%) was added as a polymerization inhibitor to stop the polymerization reaction. Next, residual monomer was removed at a water temperature of 80°C to yield a water dispersion of a polymer precursor.

The water dispersion of the polymer precursor and palladium catalyst (solution obtained through mixing of 1% palladium acetate acetone solution and an equivalent mass of deionized water) were added into an autoclave such that the palladium content was 5,000 ppm relative to the amount of solid content contained in the obtained water dispersion of the polymer precursor. A hydrogenation reaction was performed at a hydrogen pressure of 3 MPa and a temperature of 50°C for 6 hours to yield a water dispersion of a polymer A.

The water dispersion of the polymer A was mixed with an appropriate amount of NMP as an organic solvent. Next, water contained in the resultant mixture was completely evaporated under reduced pressure to yield an NMP solution of the polymer A.

<Production of surface-treated CNTs>

Multi-walled CNTs (BET specific surface area: 300 $m^2/g$) that had been weighed out in an amount of 0.8 g were added to a mixed solution of 20 mL of concentrated nitric acid and 20 mL of 1 M sulfuric acid and were stirred for 1 hour while being kept at 60°C (acid treatment). Thereafter, solid-liquid separation was performed by filtration using filter paper (Filter Paper No. 2 produced by Toyo Roshi Kaisha, Ltd.; size (diameter): 125 mm). Solids on the filter paper were washed using 200 mL of purified water, and then CNT solids (acid-treated CNTs) were collected. These CNT solids were added into 200 mL of sodium bicarbonate aqueous solution having a concentration of 2 mol/L and were subsequently stirred for 3 hours while being kept at 30°C in a water bath (base treatment). Thereafter, solid-liquid separation was performed by vacuum filtration using a membrane filter having a pore diameter of 10 $\mu$m. CNT solids (acid/base-treated CNTs) on the membrane filter were repeatedly washed using purified water. Once the electrical conductivity of washing water reached 50 $\mu$s/m or less, solid-liquid separation of the CNT solids was performed by the same method as described above. The obtained CNT solids were dried under reduced pressure at 50°C for 8 hours to thereby produce surface-treated CNTs as a fibrous conductive material. Surface acid content, surface base content, ratio of surface acid content relative to surface base content, and BET specific surface area were measured for the obtained surface-treated CNTs. The results were a surface acid content of 0.12 mmol/g, a surface base content of 0.09 mmol/g, a ratio of surface acid content relative to surface base content of 1.3, and a BET specific surface area of 300 $m^2/g$.

<Production of paste>

After adding 3 parts of the surface-treated CNTs obtained as described above as a fibrous conductive material, 40 parts (equivalent to 2.4 parts as solid content) of the 6% NMP solution of the polymer A obtained as described above, and 57 parts of NMP as a dispersion medium into a mixing vessel, these materials were stirred using a disper blade (3,000 rpm, 10 minutes). The resultant mixture was then mixed at a circumferential speed of 8 m/s for 1 hour using a bead mill (LMZ015 produced by Ashizawa Finetech Ltd.) in which zirconia beads of 1 mm in diameter were used to thereby produce a paste.

A rheometer (MCR 302 produced by Anton Paar) was used to measure the viscosity and solid content concentration of the obtained paste. The results were a paste viscosity of 38 Pa·s at a temperature of 25°C and a shear rate of 0.1 $s^{-1}$ and a solid content concentration of 5.4%. The obtained paste was used to evaluate dispersibility of the paste. The result is shown in Table 1.

<Production of slurry for positive electrode>

A slurry for a positive electrode was produced by adding 100 parts of a ternary active material having a layered structure ($LiNi_{0.8}Co_{0.1}Mn_{0.1}O_2$; average particle diameter: 10 $\mu$m) as a positive electrode active material, 26.5 parts (solid content concentration: 5.4%) of the paste obtained as described above, and NMP into a vessel and performing mixing thereof in a planetary mixer (60 rpm, 30 minutes). Note that the additive amount of NMP was adjusted such that the viscosity of the obtained slurry for a positive electrode was within a range of 3,500 mPa·s to 4,500 mPa·s.

The solid content concentration of the obtained slurry for a positive electrode was measured. Moreover, the obtained slurry for a positive electrode was used to evaluate sedimentation resistance of the slurry for a positive electrode. The results are shown in Table 1.

<Production of positive electrode for secondary battery>

Aluminum foil of 20 $\mu$m in thickness was prepared as a current collector. The slurry for a positive electrode obtained as described above was applied onto the aluminum foil by a comma coater such as to have a coating weight after drying of 21 mg/cm$^2$, was dried at 120°C for 20 minutes and at 130°C for 20 minutes, and was then heat treated at 60°C for 10 hours to obtain a positive electrode web. This positive electrode web was rolled by roll pressing to produce a sheet-shaped positive electrode including the aluminum foil and a positive electrode mixed material layer (density: 3.4 g/cm$^3$). Note that the thickness of the sheet-shaped positive electrode was 61 $\mu$m. The sheet-shaped positive electrode was cut to 4.8 cm in width and 50 cm in length to obtain a positive electrode for a lithium ion secondary battery.

Binding capacity was evaluated for the obtained positive electrode for a secondary battery. The result is shown in Table 1.

<Production of negative electrode for secondary battery>

A 5 MPa pressure-resistant vessel equipped with a stirrer was charged with 33 parts of 1,3-butadiene as an aliphatic conjugated diene monomer, 3.5 parts of itaconic acid as a carboxy group-containing monomer, 63.5 parts of styrene as an aromatic vinyl monomer, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C so as to initiate polymerization. The polymerization reaction was quenched by cooling at the point at which the polymerization conversion rate reached 96% to yield a mixture containing a particulate binder (styrene-butadiene copolymer). The mixture was adjusted to pH 8 through addition of 5% sodium hydroxide aqueous solution and was then subjected to thermal-vacuum distillation to remove unreacted monomer. Thereafter, the mixture was cooled to 30°C or lower to obtain a water dispersion containing a binder for a negative electrode.

Next, 48.75 parts of artificial graphite and 48.75 parts of natural graphite as negative electrode active materials and 1 part of carboxymethyl cellulose as a thickener were loaded into a planetary mixer. These materials were diluted to a solid content concentration of 60% with deionized water and were then kneaded at a rotation speed of 45 rpm for 60 minutes. Thereafter, 1.5 parts in terms of solid content of the water dispersion containing the binder for a negative electrode that was obtained as described above was added and kneaded therewith at a rotation speed of 40 rpm for 40 minutes. The viscosity was adjusted to 3,000 $\pm$ 500 mPa·s (measured by B-type viscometer at 25°C and 60 rpm) through addition of deionized water to produce a slurry for a secondary battery negative electrode.

Next, copper foil of 15 $\mu$m in thickness was prepared as a current collector. The slurry for a secondary battery negative electrode was applied onto both sides of the copper foil such that the coating weight after drying at each side was 10 mg/cm$^2$, and was dried at 60°C for 20 minutes and at 120°C for 20 minutes. Thereafter, 2 hours of heat treatment was performed at 150°C to obtain a negative electrode web. The negative electrode web was rolled by roll pressing to produce a sheet-shaped negative electrode including the copper foil and negative electrode mixed material layers (both sides) of 1.6 g/cm$^3$ in density. The sheet-shaped negative electrode was cut to 5.0 cm in width and 52 cm in length to obtain a negative electrode for a lithium ion secondary battery.

<Production of secondary battery>

The positive electrode for a secondary battery and negative electrode for a secondary battery produced as described above were wound up with the respective electrode mixed material layers thereof facing each other and with a separator (microporous membrane made of polyethylene) of 15 $\mu$m in thickness interposed therebetween using a core of 20 mm in diameter so as to obtain a roll. The obtained roll was compressed to a thickness of 4.5 mm from one direction at a rate of 10 mm/s. Note that the compressed roll had an elliptical shape in plan view, and the ratio of the major axis to the minor axis (major axis/minor axis) was 7.7.

In addition, a LiPF$_6$ solution of 1.0 M in concentration (solvent: mixed solvent of ethylene carbonate (EC)/ethyl methyl carbonate (EMC) = 3/7 (volume ratio); additive: containing 2 volume% (solvent ratio) of vinylene carbonate) was prepared as an electrolyte solution.

Thereafter, the compressed roll was housed inside a laminate case made of aluminum together with 3.2 g of the non-aqueous electrolyte solution. After connecting a nickel lead at a specific location on the negative electrode and connecting an aluminum lead at a specific location on the positive electrode, an opening of the case was heat sealed to obtain a lithium ion secondary battery. This lithium ion secondary battery had a pouch shape of a specific size capable of housing the above-described roll. The nominal capacity of the battery was 700 mAh.

The rate of resistance increase after a cycling test was evaluated for the obtained lithium ion secondary battery. The result is shown in Table 1.

(Example 2)

A polymer A, surface-treated CNTs, a paste, a slurry for a positive electrode, a positive electrode for a secondary battery, a negative electrode for a secondary battery, and a secondary battery were produced and various evaluations were performed in the same way as in Example 1 with the exception that in production of the polymer A, the amounts of acrylonitrile and 1,3-butadiene were changed such that the chemical composition of the polymer A was a chemical composition indicated in Table 1. The results are shown in Table 1.

(Example 3)

A polymer A, surface-treated CNTs, a paste, a slurry for a positive electrode, a positive electrode for a secondary battery, a negative electrode for a secondary battery, and a secondary battery were produced and various evaluations were performed in the same way as in Example 1 with the exception that in production of the paste, the amount of the surface-treated CNTs was changed to 2.2 parts and the amount of NMP was changed to 57.8 parts. The results are shown in Table 1.

(Example 4)

A polymer A, surface-treated CNTs, a paste, a slurry for a positive electrode, a positive electrode for a secondary battery, a negative electrode for a secondary battery, and a secondary battery were produced and various evaluations were performed in the same way as in Example 1 with the exception that surface-treated CNTs produced as described below were used instead of the surface-treated CNTs in Example 1. The results are shown in Table 1.

<Production of surface-treated CNTs>

Multi-walled carbon nanotubes (BET specific surface area: 300 $m^2/g$) that had been weighed out in an amount of 1 g were added to a mixed solution of 40 mL of concentrated nitric acid and 40 mL of 2 M sulfuric acid and were stirred for 1 hour while being kept at 60°C (acid treatment). Thereafter, solid-liquid separation was performed by filtration using filter paper (Filter Paper No. 2 produced by Toyo Roshi Kaisha, Ltd.; size (diameter): 125 mm). Solids on the filter paper were washed using 200 mL of purified water, and then CNT solids (acid-treated CNTs) were collected. These CNT solids were added into 200 mL of lithium hydroxide aqueous solution having a concentration of 2.5 mol/L and were subsequently stirred for 2 hours while being kept at 25°C in a water bath (base treatment). Thereafter, solid-liquid separation was performed by vacuum filtration using a membrane filter having a pore diameter of 10 $\mu$m. CNT solids (acid/base-treated CNTs) on the membrane filter were repeatedly washed using purified water. Once the electrical conductivity of washing water reached 50 $\mu$s/m or less, solid-liquid separation of the CNT solids was performed by the same method as described above. The obtained CNT solids were dried under reduced pressure at 50°C for 8 hours to thereby produce surface-treated CNTs. Surface acid content, surface base content, ratio of surface acid content relative to surface base content, and BET specific surface area were measured for the obtained surface-treated CNTs. The results were a surface acid content of 0.02 mmol/g, a surface base content of 0.06 mmol/g, a ratio of surface acid content relative to surface base content of 0.3, and a BET specific surface area of 300 $m^2/g$.

(Examples 5 and 6 and Comparative Example 3)

A polymer A, surface-treated CNTs, a paste, a slurry for a positive electrode, a positive electrode for a secondary battery, a negative electrode for a secondary battery, and a secondary battery were produced and various evaluations were performed in the same way as in Example 1 with the exception that in production of the polymer A, the amount of t-dodecyl mercaptan as a chain transfer agent was adjusted so as to change the Mooney viscosity of the polymer A to a value indicated in Table 1 or Table 4. The results are shown in Tables 1 and 4.

(Example 7)

A polymer A, surface-treated CNTs, a paste, a slurry for a positive electrode, a positive electrode for a secondary battery, a negative electrode for a secondary battery, and a secondary battery were produced and various evaluations were performed in the same way as in Example 1 with the exception that in production of the polymer A, a condition of the hydrogenation reaction (palladium content relative to mass of solid content contained in water dispersion of polymer precursor) was changed so as to change the iodine value of the polymer A to a value indicated in Table 1. The results are shown in Table 1.

(Examples 8 and 9 and Comparative Example 1)

A polymer A, surface-treated CNTs, a paste, a slurry for a positive electrode, a positive electrode for a secondary battery, a negative electrode for a secondary battery, and a secondary battery were produced and various evaluations were performed in the same way as in Example 1 with the exception that in production of the paste, the used amount of the polymer A was changed to an amount indicated in Table 2 or 4, and the amount of NMP was also changed in accompaniment thereto. The results are shown in Tables 2 and 4.

(Example 10)

A polymer A, surface-treated CNTs, a paste, a slurry for a positive electrode, a positive electrode for a secondary battery, a negative electrode for a secondary battery, and a secondary battery were produced and various evaluations were performed in the same way as in Example 1 with the exception that the amount of the polymer A used in production of the paste was changed to an amount indicated in Table 2 and that polyvinylidene fluoride (PVdF) was added as a polymer B in production of the slurry for a positive electrode such as to be contained in a proportion indicated Table 2. The results are shown in Table 2.

(Example 11)

A polymer A, surface-treated CNTs, a paste, a slurry for a positive electrode, a positive electrode for a secondary battery, a negative electrode for a secondary battery, and a secondary battery were produced and various evaluations were performed in the same way as in Example 1 with the exception that in production of the paste, the amount of the surface-treated CNTs was changed to 2.1 parts, and 0.9 parts of acetylene black (Li-435 produced by Denka Company Limited) was further added as a particulate conductive material. The results are shown in Table 2.

(Example 12)

A polymer A, surface-treated CNTs, a paste, a slurry for a positive electrode, a positive electrode for a secondary battery, a negative electrode for a secondary battery, and a secondary battery were produced and various evaluations were performed in the same way as in Example 1 with the exception that the base treatment time in Example 4 was changed so as to change the ratio of surface acid content relative to surface base content of the surface-treated CNTs to 0.1. The results are shown in Table 2.

(Example 13)

A polymer A, surface-treated CNTs, a paste, a slurry for a positive electrode, a positive electrode for a secondary battery, a negative electrode for a secondary battery, and a secondary battery were produced and various evaluations were performed in the same way as in Example 1 with the exception that the acid treatment time in Example 1 was changed so as to change the ratio of surface acid content relative to surface base content of the surface-treated CNTs to 2. The results are shown in Table 2.

(Example 14)

A polymer A, surface-treated CNTs, a paste, a slurry for a positive electrode, a positive electrode for a secondary battery, a negative electrode for a secondary battery, and a secondary battery were produced and various evaluations were performed in the same way as in Example 1 with the exception that in production of the paste, the amount of the surface-treated CNTs was changed to 10 parts. The results are shown in Table 2.

(Example 15)

A polymer A, surface-treated CNTs, a paste, a slurry for a positive electrode, a positive electrode for a secondary battery, a negative electrode for a secondary battery, and a secondary battery were produced and various evaluations were performed in the same way as in Example 1 with the exception that in production of the paste, the amount of the surface-treated CNTs was changed to 2.1 parts, and 0.9 parts of graphene A (aspect ratio: 100; maximum length in in-plane direction: 1 $\mu$m; thickness: 10 nm) was further added as a plate-shaped conductive material. The results are shown in Table 3.

(Example 16)

A polymer A, surface-treated CNTs, a paste, a slurry for a positive electrode, a positive electrode for a secondary battery, a negative electrode for a secondary battery, and a secondary battery were produced and various evaluations were performed in the same way as in Example 15 with the exception that in production of the polymer A, the amount of 1,3-butadiene was changed, and butyl acrylate as a (meth)acrylic acid ester monomer was further charged to the reactor so as to change the chemical composition of the polymer A to a chemical composition indicated in Table 3. The results are shown in Table 3.

(Example 17)

A polymer A, surface-treated CNTs, a paste, a slurry for a positive electrode, a positive electrode for a secondary battery, a negative electrode for a secondary battery, and a secondary battery were produced and various evaluations were performed in the same way as in Example 15 with the exception that in production of the polymer A, the amounts of acrylonitrile and 1,3-butadiene were changed, and styrene as an aromatic vinyl monomer and methacrylic acid as a (meth)acrylic acid ester monomer were further charged to the reactor so as to change the chemical composition of the polymer A to a chemical composition indicated in Table 3. The results are shown in Table 3.

(Example 18)

A polymer A, surface-treated CNTs, a paste, a slurry for a positive electrode, a positive electrode for a secondary battery, a negative electrode for a secondary battery, and a secondary battery were produced and various evaluations were performed in the same way as in Example 15 with the exception that in production of the polymer A, the amount of acrylonitrile was changed, and methacrylic acid as a (meth)acrylic acid ester monomer was further charged to the reactor so as to change the chemical composition of the polymer A to a chemical composition indicated in Table 3. The results are shown in Table 3.

(Example 19)

A polymer A, surface-treated CNTs, a paste, a slurry for a positive electrode, a positive electrode for a secondary battery, a negative electrode for a secondary battery, and a secondary battery were produced and various evaluations were performed in the same way as in Example 15 with the exception that in production of the paste, the amount of the surface-treated CNTs was changed to 1.8 parts, and 0.9 parts of graphene A as a plate-shaped conductive material and 0.3 parts of acetylene black (Li-435 produced by Denka Company Limited) were further added. The results are shown in Table 3.

(Example 20)

A polymer A, surface-treated CNTs, a paste, a slurry for a positive electrode, a positive electrode for a secondary battery, a negative electrode for a secondary battery, and a secondary battery were produced and various evaluations were performed in the same way as in Example 15 with the exception that in production of the paste, the amount of the surface-treated CNTs was changed to 1.2 parts and the amount of graphene A was changed to 1.8 parts. The results are shown in Table 3.

(Examples 21 to 24)

A polymer A, surface-treated CNTs, a paste, a slurry for a positive electrode, a positive electrode for a secondary battery, a negative electrode for a secondary battery, and a secondary battery were produced and various evaluations were performed in the same way as in Example 15 with the exception that in production of the paste, graphene B (aspect ratio: 100; maximum length in in-plane direction: 12 $\mu$m; thickness: 120 nm) was used instead of graphene A in Example 21, graphene C (aspect ratio: 3; maximum length in in-plane direction: 0.12 $\mu$m; thickness: 40 nm) was used instead of graphene A in Example 22, graphene D (aspect ratio: 25; maximum length in in-plane direction: 0.6 $\mu$m; thickness: 24 nm) was used instead of graphene A in Example 23, and graphene E (aspect ratio: 182; maximum length in in-plane direction: 4 $\mu$m; thickness: 22 nm) was used instead of graphene A in Example 24. The results are shown in Table 3.

(Comparative Example 2)

Surface-treated CNTs, a paste for a secondary battery, a slurry for a positive electrode, a positive electrode for a secondary battery, a negative electrode for a secondary battery, and a secondary battery were produced and various evaluations were performed in the same way as in Example 1 with the exception that in production of the slurry for a positive electrode, a paste containing polyvinylidene fluoride (PVdF) as a polymer B instead of the polymer A was used. The results are shown in Table 4.

(Comparative Example 4)

Surface-treated CNTs, a paste for a secondary battery, a slurry for a positive electrode, a positive electrode for a secondary battery, a negative electrode for a secondary battery, and a secondary battery were produced and various evaluations were performed in the same way as in Example 1 with the exception that in production of the paste, the water dispersion of the polymer precursor obtained in production of the polymer A was used instead of the 6% NMP solution of the polymer A. The results are shown in Table 4.

In Tables 1 to 4, shown below:

"CNT" indicates carbon nanotubes;
"GrA" indicates graphene A;
"GrB" indicates graphene B;
"GrC" indicates graphene C;
"GrD" indicates graphene D;
"GrE" indicates graphene E;
"AB" indicates acetylene black; and
"PVdF" indicates polyvinylidene fluoride.

[Table 1]

Table 1

| | | | Example 1 | Example 2 | Example 3 | Example 4 | Example 5 | Example 6 | Example 7 |
|---|---|---|---|---|---|---|---|---|---|
| Polymer A | Chemical composition | Acrylonitrile units [mass%] | 35 | 45 | 35 | 35 | 35 | 35 | 35 |
| | | 1,3-Butadiene units + Hydrogenated 1,3-butadiene units [mass%] | 65 | 55 | 65 | 65 | 65 | 65 | 65 |
| | | Butyl acrylate units [mass%] | - | - | - | - | - | - | - |
| | | Styrene units [mass%] | - | - | - | - | - | - | - |
| | | Methacrylic acid units [mass%] | - | - | - | - | - | - | - |
| | | 1,3-Butadiene units [mass%] | - | - | - | - | - | - | - |
| | Mooney viscosity [-] | | 110 | 125 | 110 | 110 | 90 | 135 | 110 |
| | Iodine value [mg/100 mg] | | 7 | 7 | 7 | 7 | 7 | 7 | 50 |
| | Amount of polymer A per 100 parts by mass of conductive material [parts by mass] | | 80 | 80 | 80 | 80 | 80 | 80 | 80 |

| | | | Example 1 | Example 2 | Example 3 | Example 4 | Example 5 | Example 6 | Example 7 |
|---|---|---|---|---|---|---|---|---|---|
| Conductive material | Proportional content of conductive material [mass%] | | 3 | 3 | 2.2 | 3 | 3 | 3 | 3 |
| | Type of fibrous conductive material | | CNT | CNT | CNT | CNT | CNT | CNT | CNT |
| | Ratio of surface acid content relative to surface base content of fibrous conductive material (surface acid content/surface base content) [-] | | 1.3 | 1.3 | 1.3 | 0.3 | 1.3 | 1.3 | 1.3 |
| | Plate-shaped conductive material | Type | - | - | - | - | - | - | - |
| | | Aspect ratio [-] | - | - | - | - | - | - | - |
| | | Maximum length in in-plane direction [$\mu$m] | - | - | - | - | - | - | - |
| | | Thickness [nm] | - | - | - | - | - | - | - |
| | Type of particulate conductive material | | - | - | - | - | - | - | - |
| | Content ratio of fibrous conductive material, plate-shaped conductive material, and particulate conductive material (fibrous conductive material/plate-shaped conductive material/particulate conductive material) [-] | | 100/0/0 | 100/0/0 | 100/0/0 | 100/0/0 | 100/0/0 | 100/0/0 | 100/0/0 |
| Polymer B | | | - | - | - | - | - | - | - |
| Proportion of polymer B relative to total content of polymer A and polymer B [%] | | | - | - | - | - | - | - | - |
| Dispersibility of paste | | | A | A | A | A | A | B | B |
| Solid content concentration of slurry for positive electrode | | | A | A | A | A | A | B | B |
| Sedimentation resistance of slurry for positive electrode | | | A | A | A | A | B | B | A |
| Binding capacity | | | A | A | B | A | B | A | B |
| Rate of resistance increase after cycling test | | | A | B | A | A | B | A | B |

[Table 2]

Table 2

| | | | Example 8 | Example 9 | Example 10 | Example 11 | Example 12 | Example 13 | Example 14 |
|---|---|---|---|---|---|---|---|---|---|
| Polymer A | Chemical composition | Acrylonitrile units [mass%] | 35 | 35 | 35 | 35 | 35 | 35 | 35 |
| | | 1,3-Butadiene units + Hydrogenated 1,3-butadiene units [mass%] | 65 | 65 | 65 | 65 | 65 | 65 | 65 |
| | | Butyl acrylate units [mass%] | - | - | - | - | - | - | - |
| | | Styrene units [mass%] | - | - | - | - | - | - | - |
| | | Methacrylic acid units [mass%] | - | - | - | - | - | - | - |
| | | 1,3-Butadiene units [mass%] | - | - | - | - | - | - | - |
| | Mooney viscosity [-] | | 110 | 110 | 110 | 110 | 110 | 110 | 110 |
| | Iodine value [mg/100 mg] | | 7 | 7 | 7 | 7 | 7 | 7 | 7 |
| | Amount of polymer A per 100 parts by mass of conductive material [parts by mass] | | 55 | 140 | 62 | 80 | 80 | 80 | 80 |

|  |  |  | Example 8 | Example 9 | Example 10 | Example 11 | Example 12 | Example 13 | Example 14 |
|---|---|---|---|---|---|---|---|---|---|
| Conductive material | Proportional content of conductive material [mass%] | | 3 | 3 | 3 | 3 | 3 | 3 | 10 |
| | Type of fibrous conductive material | | CNT | CNT | CNT | CNT | CNT | CNT | CNT |
| | Ratio of surface acid content relative to surface base content of fibrous conductive material (surface acid content/surface base content) [-] | | 1.3 | 1.3 | 1.3 | 1.3 | 0.1 | 2 | 1.3 |
| | Plate-shaped conductive material | Type | - | - | - | - | - | - | - |
| | | Aspect ratio [-] | - | - | - | - | - | - | - |
| | | Maximum length in in-plane direction [$\mu$m] | - | - | - | - | - | - | - |
| | | Thickness [nm] | - | - | - | - | - | - | - |
| | Type of particulate conductive material | | - | - | - | AB | - | - | - |
| | Content ratio of fibrous conductive material plate-shaped conductive material, and particulate conductive material (fibrous conductive material plate-shaped conductive material/particulate conductive material) [-] | | 100/0/0 | 100/0/0 | 100/0/0 | 70/0/30 | 100/0/0 | 100/0/0 | 100/0/0 |
| Polymer B | | | - | - | PVdF | - | - | - | - |
| Proportion of polymer B relative to total content of polymer A and polymer B [%] | | | - | - | 30 | - | - | - | - |
| Dispersibility of paste | | | B | A | A | A | B | B | C |
| Solid content concentration of slurry for positive electrode | | | A | B | B | A | C | B | C |
| Sedimentation resistance of slurry for positive electrode | | | A | A | A | A | C | B | C |
| Binding capacity | | | B | A | B | A | B | B | C |
| Rate of resistance increase after cycling test | | | A | B | B | B | B | C | B |

EP 4 254 565 A1

[Table 3]

Table 3

| | | | Example 15 | Example 16 | Example 17 | Example 18 | Example 19 | Example 20 | Example 21 | Example 22 | Example 23 | Example 24 |
|---|---|---|---|---|---|---|---|---|---|---|---|---|
| Polymer A | Chemical composition | Acrylonitrile units [mass%] | 35 | 35 | 15 | 32 | 35 | 35 | 35 | 35 | 35 | 35 |
| | | 1,3-Butadiene units + Hydrogenated 1,3-butadiene units [mass%] | 65 | 55 | 55 | 65 | 65 | 65 | 65 | 65 | 65 | 65 |
| | | Butyl acrylate units [mass%] | - | 10 | - | - | - | - | - | - | - | - |
| | | Styrene units [mass%] | - | - | 25 | - | - | - | - | - | - | - |
| | | Methacrylic acid units [mass%] | - | - | 5 | 3 | - | - | - | - | - | - |
| | | 1,3-Butadiene units [mass%] | - | - | - | - | - | - | - | - | - | - |
| | Mooney viscosity [-] | | 110 | 110 | 110 | 110 | 110 | 110 | 110 | 110 | 110 | 110 |
| | Iodine value [mg/100 mg] | | 7 | 7 | 7 | 7 | 7 | 7 | 7 | 7 | 7 | 7 |
| | Amount of polymer A per 100 parts by mass of conductive material [parts by mass] | | 80 | 80 | 80 | 80 | 80 | 80 | 80 | 80 | 80 | 80 |

(continued)

| | | | Example 15 | Example 16 | Example 17 | Example 18 | Example 19 | Example 20 | Example 21 | Example 22 | Example 23 | Example 24 |
|---|---|---|---|---|---|---|---|---|---|---|---|---|
| Conductive material | | Proportional content of conductive material [mass%] | 3 | 3 | 3 | 3 | 3 | 3 | 3 | 3 | 3 | 3 |
| | | Type of fibrous conductive material | CNT | CNT | CNT | CNT | CNT | CNT | CNT | CNT | CNT | CNT |
| | | Ratio of surface acid content relative to surface base content of fibrous conductive material (surface acid content surface base content) [-] | 1.3 | 1.3 | 1.3 | 1.3 | 1.3 | 1.3 | 1.3 | 1.3 | 1.3 | 1.3 |
| | Plate-shaped conductive material | Type | GrA | GrA | GrA | GrA | GrA | GrA | GrB | GrC | GrD | GrE |
| | | Aspect ratio [-] | 100 | 100 | 100 | 100 | 100 | 100 | 100 | 3 | 25 | 182 |
| | | Maximum length in in-plane direction [$\mu$m] | 1 | 1 | 1 | 1 | 1 | 1 | 12 | 0.12 | 0.6 | 4 |
| | | Thickness [nm] | 10 | 10 | 10 | 10 | 10 | 10 | 120 | 40 | 24 | 22 |
| | | Type of particulate conductive material | - | - | - | - | AB | - | - | - | - | - |
| | | Content ratio offibrous conductive material, plate-shaped conductive material, and particulate conductive material (fibrous conductive material/ plate-shaped conductive material/ particulate conductive material) [-] | 70/30/0 | 70/30/0 | 70/30/0 | 70/30/0 | 60/30/10 | 40/60/0 | 70/30/0 | 70/30/0 | 70/30/0 | 70/30/0 |
| Polymer B | | | - | - | - | - | - | - | - | - | - | - |
| Proportion of polymer B relative to total content of polymer A and polymer B [%] | | | - | - | - | - | - | - | - | - | - | - |
| Dispersibility of paste | | | A | B | A | B | A | C | B | B | A | A |
| Solid content concentration of slurry for positive electrode | | | A | A | B | A | A | B | B | B | A | A |

(continued)

| | Example 15 | Example 16 | Example 17 | Example 18 | Example 19 | Example 20 | Example 21 | Example 22 | Example 23 | Example 24 |
|---|---|---|---|---|---|---|---|---|---|---|
| Sedimentation resistance of slurry for positive electrode | A | B | A | A | A | c | c | B | A | A |
| Binding capacity | A | B | A | A | A | B | B | B | A | A |
| Rate of resistance increase after cycling test | A | A | A | A | B | B | B | C | A | A |

[Table 4]

[Table 4]

Table 4

| | | | Comparative Example 1 | Comparative Example 2 | Comparative Example 3 | Comparative Example 4 |
|---|---|---|---|---|---|---|
| Polymer A | Chemical composition | Acrylonitrile units [mass%] | 35 | - | 35 | 35 |
| | | 1,3-Butadiene units + Hydrogenated 1,3-butadiene units [mass%] | 65 | - | 65 | - |
| | | Butyl acrylate units [mass%] | - | - | - | - |
| | | Styrene units [mass%] | - | - | - | - |
| | | Methacrylic acid units [mass%] | - | - | - | - |
| | | 1,3-Butadiene units [mass%] | - | - | - | 65 |
| | Mooney viscosity [-] | | 110 | - | 50 | 110 |
| | Iodine value [mg/100 mg] | | 7 | - | 7 | 280 |
| | Amount of polymer A per 100 parts by mass of conductive material [parts by mass] | | 20 | - | 80 | 80 |
| Conductive material | Proportional content of conductive material [mass%] | | CNT | CNT | CNT | CNT |
| | Type of fibrous conductive material | | 3 | 3 | 3 | 3 |
| | Ratio of surface acid content relative to surface base content of fibrous conductive material (surface acid content/surface base content) [-] | | 1.3 | 1.3 | 1.3 | 1.3 |
| | Plate-shaped conductive material | Type | - | - | - | - |
| | | Aspect ratio [-] | - | - | - | 100 |
| | | Maximum length in in-plane direction [$\mu$m] | - | - | - | 1 |
| | | Thickness [nm] | - | - | - | 10 |
| | Type of particulate conductive material | | - | - | - | - |
| | Content ratio of fibrous conductive material, plate-shaped conductive material and particulate conductive material (fibrous conductive material/plate-shaped conductive material/particulate conductive material) [-] | | 100/0/0 | 100/0/0 | 100/0/0 | 70/30/0 |
| Polymer B | | | - | PVdF | - | - |
| Proportion of polymer B relative to total content of polymer A and polymer B [%] | | | - | - | - | - |

(continued)

|  | Comparative Example 1 | Comparative Example 2 | Comparative Example 3 | Comparative Example 4 |
|---|---|---|---|---|
| Dispersibility of paste | D | D | A | C |
| Solid content concentration of slurry for positive electrode | C | C | C | C |
| Sedimentation resistance of slurry for positive electrode | D | D | D | D |
| Binding capacity | C | B | C | C |
| Rate of resistance increase after cycling test | D | D | D | D |

It can be seen from Tables 1 to 3 that in Examples 1 to 16 in which the used paste contained a conductive material including CNTs, a polymer A having a specific chemical composition and Mooney viscosity, and a dispersion medium and contained the conductive material and the polymer A in specific proportions, it was possible to improve dispersibility and sedimentation resistance of a slurry for a positive electrode and to reduce internal resistance over a long period in a lithium ion secondary battery. It can also be seen from Examples 15 to 24 that sedimentation resistance of a slurry for a positive electrode was excellent even in a case in which the paste contained a plate-shaped conductive material.

In contrast, it can be seen from Table 4 that it was not possible to reduce internal resistance of a lithium ion secondary battery over a long period in a case in which the used paste did not contain a specific amount of the polymer A (Comparative Example 1), a case in which the used paste did not contain the polymer A (Comparative Example 2), a case in which the polymer A in the used paste did not have a specific Mooney viscosity (Comparative Example 3), and a case in which the polymer A in the used paste did not include an alkylene structural unit (Comparative Example 4).

INDUSTRIAL APPLICABILITY

According to the present disclosure, it is possible to provide a paste for an electrochemical device that can improve dispersibility and sedimentation resistance of a slurry for an electrochemical device electrode and can also reduce internal resistance of an electrochemical device over a long period.

Moreover, according to the present disclosure, it is possible to provide a slurry for an electrochemical device electrode that has excellent dispersibility and sedimentation resistance and can reduce internal resistance of an electrochemical device over a long period.

Furthermore, according to the present disclosure, it is possible to provide an electrode for an electrochemical device that can reduce internal resistance of an electrochemical device over a long period.

Also, according to the present disclosure, it is possible to provide an electrochemical device having reduced internal resistance over a long period.

**Claims**

1.  A paste for an electrochemical device comprising a conductive material, a polymer A, and a dispersion medium, wherein

    the conductive material includes a fibrous conductive material,
    the paste for an electrochemical device contains the conductive material in a proportion of more than 2 mass%,
    the polymer A includes a nitrile group-containing monomer unit and an alkylene structural unit and has a Mooney viscosity ($ML_{1+4}$, 100°C) of not less than 70 and not more than 150, and
    the paste for an electrochemical device contains the polymer A in a proportion of more than 50 parts by mass and not more than 200 parts by mass per 100 parts by mass of the conductive material.

2.  The paste for an electrochemical device according to claim 1, wherein the polymer A has an iodine value of not less than 0.01 mg/100 mg and not more than 70 mg/100 mg.

3.  The paste for an electrochemical device according to claim 1 or 2, wherein the fibrous conductive material has a ratio of surface acid content relative to surface base content of not less than 0.1 and not more than 2.5.

4.  The paste for an electrochemical device according to claim 3, wherein the surface base content is not less than 0.005 mmol/g and not more than 0.1 mmol/g, and the surface acid content is not less than 0.01 mmol/g and not more than 0.2 mmol/g.

5.  The paste for an electrochemical device according to any one of claims 1 to 4, wherein the dispersion medium is an organic solvent.

6.  The paste for an electrochemical device according to any one of claims 1 to 5, wherein the conductive material further includes either or both of a particulate conductive material and a plate-shaped conductive material.

7.  The paste for an electrochemical device according to claim 6, wherein the plate-shaped conductive material has a ratio of maximum length in an in-plane direction of the plate-shaped conductive material relative to thickness of the plate-shaped conductive material of not less than 5 and not more than 500.

8. The paste for an electrochemical device according to claim 7, wherein the maximum length in an in-plane direction of the plate-shaped conductive material is not less than 0.1 $\mu$m and not more than 10 $\mu$m.

9. The paste for an electrochemical device according to claim 7 or 8, wherein the thickness of the plate-shaped conductive material is not less than 0.3 nm and not more than 50 nm.

10. The paste for an electrochemical device according to any one of claims 1 to 9, wherein the conductive material includes the fibrous conductive material and a conductive material other than the fibrous conductive material in a mass ratio of 100:0 to 50:50.

11. A slurry for an electrochemical device electrode comprising: an electrode active material; and the paste for an electrochemical device according to any one of claims 1 to 10.

12. The slurry for an electrochemical device electrode according to claim 11, further comprising a polymer B, wherein content of the polymer B is 50 mass% or less relative to total content of the polymer A and the polymer B.

13. The slurry for an electrochemical device electrode according to claim 12, wherein the polymer B is a fluorine-containing resin.

14. An electrode for an electrochemical device comprising an electrode mixed material layer formed using the slurry for an electrochemical device electrode according to any one of claims 11 to 13.

15. An electrochemical device comprising the electrode for an electrochemical device according to claim 14.

## INTERNATIONAL SEARCH REPORT

| International application No. |
| --- |
| **PCT/JP2021/042327** |

**A. CLASSIFICATION OF SUBJECT MATTER**

*H01M 4/62*(2006.01)i; *H01G 11/06*(2013.01)i; *H01G 11/38*(2013.01)i; *H01G 11/40*(2013.01)i; *H01M 4/13*(2010.01)i
FI:  H01M4/62 Z; H01M4/13; H01G11/40; H01G11/38; H01G11/06

According to International Patent Classification (IPC) or to both national classification and IPC

**B. FIELDS SEARCHED**

Minimum documentation searched (classification system followed by classification symbols)

H01M4/62; H01G11/06; H01G11/38; H01G11/40; H01M4/13

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2018/123624 A1 (ZEON CORP) 05 July 2018 (2018-07-05) example 10 | 1-2, 5-9, 11-15 |
| A | JP 2018-522803 A (LG CHEMICAL LTD) 16 August 2018 (2018-08-16) | 1-15 |
| A | WO 2017/010093 A1 (ZEON CORP) 19 January 2017 (2017-01-19) | 1-15 |

☐ Further documents are listed in the continuation of Box C.      ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **28 December 2021** | **18 January 2022** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

INTERNATIONAL SEARCH REPORT
Information on patent family members

International application No.

**PCT/JP2021/042327**

| Patent document cited in search report | | | Publication date (day/month/year) | Patent family member(s) | | | Publication date (day/month/year) |
|---|---|---|---|---|---|---|---|
| WO | 2018/123624 | A1 | 05 July 2018 | US | 2019/0348681 | A1 | |
| | | | | example 10 | | | |
| | | | | EP | 3565033 | A1 | |
| | | | | CN | 110088947 | A | |
| | | | | KR | 10-2019-0097048 | A | |
| JP | 2018-522803 | A | 16 August 2018 | US | 2018/0226650 | A1 | |
| | | | | WO | 2017/043818 | A1 | |
| | | | | EP | 3348582 | A1 | |
| | | | | KR | 10-2017-0030438 | A | |
| | | | | CN | 108064255 | A | |
| WO | 2017/010093 | A1 | 19 January 2017 | US | 2018/0198126 | A1 | |
| | | | | EP | 3324468 | A1 | |
| | | | | KR | 10-2018-0005259 | A | |
| | | | | CN | 107710472 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6633654 B
- WO 2012165120 A1
- WO 2013080989 A1
- JP 2013008485 A
- JP 2012204303 A